(19) Europäisches Patentamt
European Patent Office
Office européen des brevets

(11) EP 3 591 020 A1

(12) **EUROPEAN PATENT APPLICATION**
published in accordance with Art. 153(4) EPC

(43) Date of publication:
**08.01.2020 Bulletin 2020/02**

(21) Application number: **18760359.2**

(22) Date of filing: **01.03.2018**

(51) Int Cl.:
*C09J 201/00* (2006.01) *C09J 7/00* (2018.01)
*C09J 7/20* (2018.01) *C09J 9/00* (2006.01)
*C09J 11/06* (2006.01)

(86) International application number:
**PCT/JP2018/007896**

(87) International publication number:
**WO 2018/159784 (07.09.2018 Gazette 2018/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.03.2017 JP 2017040236**
**06.10.2017 JP 2017195729**

(71) Applicant: **Nitto Denko Corporation**
**Ibaraki-shi, Osaka 567-8680 (JP)**

(72) Inventors:
- **AKAMATSU, Kaori**
**Ibaraki-shi**
**Osaka 567-8680 (JP)**
- **MIZOBATA, Kaori**
**Ibaraki-shi**
**Osaka 5678680 (JP)**
- **AWANE Ryo**
**Ibaraki-shi**
**Osaka 567-8680 (JP)**
- **AKAZAWA Koji**
**Ibaraki-shi**
**Osaka 567-8680 (JP)**
- **YOKOYAMA Junji**
**Ibaraki-shi**
**Osaka 567-8680 (JP)**
- **HIRAO Akira**
**Ibaraki-shi**
**Osaka 567-8680 (JP)**
- **SHIMIZU Yosuke**
**Ibaraki-shi**
**Osaka 567-8680 (JP)**
- **TANAKA Akiko**
**Ibaraki-shi**
**Osaka 567-8680 (JP)**

(74) Representative: **Gill Jennings & Every LLP**
**The Broadgate Tower**
**20 Primrose Street**
**London EC2A 2ES (GB)**

(54) **ELECTRICALLY PEELABLE ADHESIVE COMPOSITION, ADHESIVE SHEET, AND ADHERED BODY**

(57) An object of the present invention is to provide an electrically debondable composition for forming an electrically debondable adhesive layer suitable for suppressing corrosion of a metal adherend surface. The present invention further provides an adhesive sheet having the electrically debondable adhesive layer, and an adhered body including the adhesive sheet. An electrically debondable composition of the present invention includes a polymer, an ionic liquid, and at least one additive selected from the group consisting of a carbodiimide compound, an adsorptive inhibitor and a chelate-forming metal deactivator.

EP 3 591 020 A1

FIG. 1

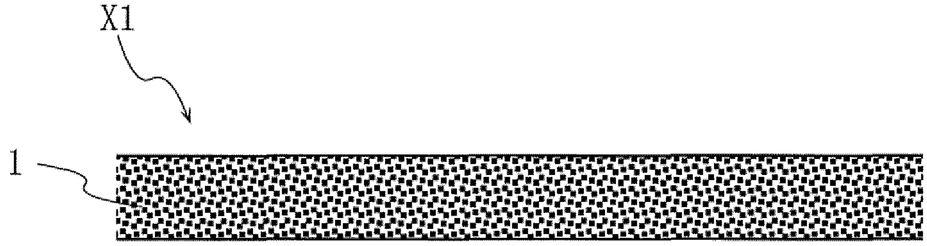

## Description

TECHNICAL FIELD

The present invention relates to an electrically debondable adhesive composition, an adhesive sheet including an adhesive layer formed from the electrically debondable adhesive composition, and an adhered body of the adhesive sheet and an adherend.

BACKGROUND ART

There is an increasing demand for rework for improving yield in a manufacturing process of an electronic component or recycle for disassembling and recovering components after use. To respond to the demand, a double-sided adhesive sheet having certain adhesive force and certain debondability is sometimes utilized in joining members in a manufacturing process of an electronic component.

As the double-sided adhesive sheet for realizing the above-described adhesive force and debondability, adhesive sheets (electrically debondable adhesive sheets) using an ionic liquid containing a cation and an anion in a component forming an adhesive and can be debonded by applying a voltage to an adhesive layer is known (Patent Literatures 1 and 2). In the electrically debondable adhesive sheets of Patent Literatures 1 and 2, it is considered that when a voltage is applied, cations of the ionic liquid move and reduction occurs in an anode side; anions of the ionic liquid moves and oxidation occurs in an anode side; adhesive force at an adhesive interface is weakened, and as a result, the adhesive sheet is easy to be debonded.

CITATION LIST

PATENT LITERATURE

Patent Literature 1: Japanese Patent No. 4139851
Patent Literature 2: JP-A-2010-37354

SUMMARY OF INVENTION

TECHNICAL PROBLEM

However, in the electrically debondable adhesive sheet as in Patent Literatures 1 and 2, in case where the electrically debondable adhesive sheet is placed in high temperature and high humidity environment in the state that the electrically debondable adhesive sheet is adhered to an adherend having a metal adherend surface, a metal of a metal adherend surface sometimes corrodes.

The present invention has been made under the above circumferences, and an object of the present invention is to provide an electrically debondable adhesive composition for forming an electrically debondable adhesive layer suitable for suppressing corrosion of a metal of a metal adherend surface. The invention further provides an adhesive sheet having an electrically debondable adhesive layer formed by the electrically debondable adhesive composition, and an adhered body including the adhesive sheet.

Furthermore, a preferred embodiment of the present invention provides an electrically debondable adhesive composition suitable for suppressing corrosion of a metal of a metal adherend surface and having satisfactory electrical debondability, an adhesive sheet having an electrically debondable adhesive layer formed by the electrically debondable adhesive composition, and an adhered body including the adhesive sheet.

SOLUTION TO PROBLEM

The present inventors made tests in order to replicate corrosion of a metal of a metal adherend surface when an electrically debondable adhesive sheet was placed in high temperature and high humidity environment in the state that the electrically debondable adhesive sheet was adhered to an adherend having a metal adherend surface. As a result, change such as discoloration was appeared on the metal adherend surface and corrosion by the electrically debondable adhesive sheet was generated (Comparative Example 1 in the present specification). It is considered that corrosion of the metal of the metal adherend surface is due to, for example, that a cation in an ionic liquid interacts with, for example, a carboxyl group of a polymer contained in an adhesive component, a proton ($H^+$) is released in an adhesive

layer from the carboxyl group, the proton reacts with the metal of the metal adherend surface, and that the ionic liquid itself reacts with the metal.

As a result of further intensive investigations, the present inventors have found an electrically debondable adhesive composition in which such corrosion has been suppressed from being generated.

Specifically, an electrically debondable adhesive composition according to the present invention includes a polymer, an ionic liquid, and at least one additive selected from the group consisting of a carbodiimide compound, an adsorptive inhibitor and a chelate-forming metal deactivator.

In one embodiment of the electrically debondable adhesive composition of the present invention, the carbodiimide compound is contained in an amount of 0.01 parts by mass or more and 10 parts by mass or less, per 100 parts by mass of the polymer.

In one embodiment of the electrically debondable adhesive composition of the present invention, the adsorptive inhibitor contains an alkylamine, and the content of the alkylamine is 0.01 parts by mass or more and 20 parts by mass or less, per 100 parts by mass of the polymer.

In one embodiment of the electrically debondable adhesive composition of the present invention, the adsorptive inhibitor contains a carboxylic acid salt or a carboxylic acid derivative, and the total content of the carboxylic acid salt and the carboxylic acid derivative is 0.01 parts by mass or more and 10 parts by mass or less, per 100 parts by mass of the polymer.

In one embodiment of the electrically debondable adhesive composition of the present invention, the adsorptive inhibitor contains an alkyl phosphoric acid salt, and the content of the alkyl phosphoric acid salt is 0.01 parts by mass or more and 10 parts by mass or less, per 100 parts by mass of the polymer.

In one embodiment of the electrically debondable adhesive composition of the present invention, the chelate-forming metal deactivator is contained in an amount of 0.01 parts by mass or more and 20 parts by mass or less, per 100 parts by mass of the polymer.

In one embodiment of the electrically debondable adhesive composition of the present invention, the content of the additive is 0.01 parts by mass or more and 30 parts by mass or less, per 100 parts by mass of the polymer.

In one embodiment of the electrically debondable adhesive composition of the present invention, the chelate-forming metal deactivator is a triazole group-containing compound or a benzotriazole group-containing compound.

Another electrically debondable adhesive composition of the present invention is an electrically debondable adhesive composition including a polymer and an ionic liquid, wherein the proportion of corrosion area of an aluminum-deposited film after adhering an electrically debondable adhesive layer formed by the electrically debondable adhesive composition to the aluminum-deposited film, followed by storing in a thermostatic chamber having a temperature of 85°C and a humidity of 85% RH for 24 hours is 10% or less.

In one embodiment of the electrically debondable adhesive composition of the present invention, a ratio (B/A) of adhesive force (B) measured while applying a voltage of 10V after applying a voltage of 10V for 10 seconds to initial adhesive force (A), in an electrically debondable adhesive layer of the electrically debondable adhesive composition is 0.5 or less.

In one embodiment of the electrically debondable adhesive composition of the present invention, the content of a compound having a hydrocarbon-based aromatic skeleton is 0.9% by weight or less.

In one embodiment of the electrically debondable adhesive composition of the present invention, the content of a compound having a benzotriazole skeleton is 0.9% by weight or less.

In one embodiment of the electrically debondable adhesive composition of the present invention, a solubility parameter of the polymer is 9.4 or more and 11.0 or less.

In one embodiment of the electrically debondable adhesive composition of the present invention, the polymer is acrylic polymer, and the proportion of acrylic acid to total monomer components (100% by mass) constituting the acrylic polymer is 0.1% by mass or more and 15% by mass or less.

In one embodiment of the electrically debondable adhesive composition of the present invention, an anion of the ionic liquid is an anion of a sulfonylimide-based compound.

In one embodiment of the electrically debondable adhesive composition of the present invention, the anion of a sulfonylimide-based compound is a bis(fluorosulfonyl)imide anion and/or a bis(trifluoromethanesulfonyl)imide ion.

In one embodiment of the electrically debondable adhesive composition of the present invention, a cation in the ionic liquid contains at least one selected from the group consisting of a nitrogen-containing onium cation, a sulfur-containing onium cation and a phosphorus-containing onium salt.

In one embodiment of the electrically debondable adhesive composition of the present invention, the content of the ionic liquid is 0.5 parts by mass or more and 30 parts by mass or less, per 100 parts by mass of the polymer.

An adhesive sheet of the present invention has an electrically debondable adhesive layer formed from an electrically debondable adhesive composition of the present invention.

An adhered body of the present invention has a laminate structure part including an adherend having a metal adherend surface and an adhesive sheet of the present invention having the electrically debondable adhesive layer

adhered to the metal adherend surface.

BRIEF DESCRIPTION OF DRAWINGS

FIG. 1 is a sectional view showing an example of an adhesive sheet of the present invention.
FIG. 2 is a sectional view showing an example of a laminate structure of an adhesive sheet of the present invention.
FIG. 3 is a sectional view showing another example of a laminate structure of an adhesive sheet of the present invention.
FIG. 4 is a sectional view showing an overview of a method of a 180° peel test in Examples.

DESCRIPTION OF EMBODIMENTS

The embodiment for carrying out the present invention is described in detail below. However, the present invention is not construed as being limited to the embodiments described below.

[Electrically Debondable Adhesive Composition]

Components constituting an electrically debondable adhesive composition (hereinafter simply referred to as an "adhesive composition" in some cases) of the present invention, corrosion property of the adhesive composition of the present invention, properties such as adhesive force, and a manufacturing method of the adhesive composition of the present invention are described below.

(Polymer)

An adhesive composition of the present invention contains a polymer. The polymer in the present invention is not particularly limited so long as it is a common organic polymer compound, and examples thereof include a polymerized product or a partially polymerized product of monomers. The monomers may be one kind of monomers and may be a monomer mixture of two or more kinds of monomers. The partially polymerized product means a polymerized product in which the monomer or at least a part of the monomer mixture is partially polymerized.
The polymer in the present invention is not particularly limited so long as it is the polymer used as a general adhesive and having adhesiveness, and examples thereof include an acrylic polymer, a rubber-based polymer, a vinyl alkyl ether-based polymer, a silicone-based polymer, a polyester-based polymer, a polyamide-based polymer, a urethane-based polymer, a fluorine-based polymer, and an epoxy-based polymer. The polymer can be used alone or as a combination of two or more kinds thereof. In particular, the polymer in the present invention is preferably an acrylic polymer from the standpoint of costs, productivity and adhesive force. In other words, the adhesive composition of the present invention is preferably an acrylic adhesive composition containing an acrylic polymer as a polymer.
The acrylic polymer preferably has a monomer unit derived from alkyl (meth)acrylate (the following Formula (1)) having an alkyl group having 1 to 14 carbon atoms. The monomer unit is preferable in achieving satisfactory adhesive force of an adhesive layer.

$$CH_2=C(R^a)COOR^b \qquad (1)$$

(In Formula (1), $R^a$ is a hydrogen atom or a methyl group, and $R^b$ is an alkyl group having 1 to 14 carbon atoms).
Examples of the alkyl (meth)acrylate having an alkyl group having 1 to 14 carbon atoms include methyl (meth)acrylate, ethyl (meth)acrylate, propyl (meth)acrylate, isopropyl (meth)acrylate, n-butyl (meth)acrylate, sec-butyl (meth)acrylate, 1,3-dimethylbutyl acrylate, pentyl (meth)acrylate, isopentyl (meth)acrylate, hexyl (meth)acrylate, 2-ethyl butyl (meth)acrylate, heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate. Above all, n-butyl acrylate, 2-ethylhexyl acrylate, and isononyl acrylate are preferred. The alkyl (meth)acrylate having an alkyl group having 1 to 14 carbon atoms can be used alone or as a mixture of two or more kinds thereof.
The proportion of the alkyl (meth)acrylate having an alkyl group having 1 to 14 carbon atoms to total monomer components (100% by mass) constituting the acrylic polymer is not particularly limited, but is preferably 70% by mass or more, more preferably 80% by mass or more, and still more preferably 85% by mass or more. When the proportion of the acrylic polymer is 70% by mass or more, adhesiveness to the adherend when the adhesive layer is formed is easy to be further improved.

In addition to the monomer unit derived from the alkyl (meth)acrylate having an alkyl group having 1 to 14 carbon atoms, the acrylic polymer preferably further contains a monomer unit derived from a polar group-containing monomer copolymerizable with the monomer unit for the purpose of the modification of cohesive force, heat resistance, crosslinking property, and the like. Such a monomer unit is preferred in that crosslinking point can be imparted and satisfactory adhesive force of the adhesive layer can be achieved.

Examples of the polar group-containing monomer include a carboxyl group-containing monomer, a hydroxyl group-containing monomer, a cyano group-containing monomer, a vinyl group-containing monomer, an aromatic vinyl monomer, an amide group-containing monomer, an imide group-containing monomer, an amino group-containing monomer, an epoxy group-containing monomer, a vinyl group-containing monomer, an N-acryloyl morpholine, a sulfo group-containing monomer, a phosphate group-containing monomer, and an acid anhydride group-containing monomer. Above all, from the standpoint of excellent cohesiveness, a carboxyl group-containing monomer, a hydroxyl group-containing monomer, and an amide group-containing monomer are preferred, and a carboxyl group-containing monomer is particularly preferred. A carboxyl group-containing monomer is particularly preferred in that satisfactory adhesive force of the adhesive layers achieved. The polar group-containing monomers can be used alone or as a mixture of two or more kinds thereof.

Examples of the carboxyl group-containing monomer include acrylic acid, methacrylic acid, carboxyethyl (meth)acrylate, carboxypentyl (meth)acrylate, itaconic acid, maleic acid, fumaric acid, crotonic acid, and isocrotonic acid. Acrylic acid is particularly preferred. The carboxyl group-containing monomer can be used alone or as a mixture of two or more kinds thereof.

Examples of the hydroxyl group-containing monomer include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl (meth)acrylate, N-methylol (meth)acrylamide, vinyl alcohol, allyl alcohol, 2-hydroxyethyl vinyl ether, 4-hydroxybutyl vinyl ether, and diethylene glycol monovinyl ether. 2-Hydroxyethyl (meth)acrylate and 4-hydroxybutyl (meth)acrylate are particularly preferred. The hydroxyl group-containing monomers can be used alone or as a mixture of two or more kinds thereof.

Examples of the amide group-containing monomer include acrylamide, methacrylamide, N-vinyl pyrrolidone, N,N-dimethylacrylamide, N,N-dimethyl methacrylamide, N,N-diethylacrylamide, N,N-diethyl methacrylamide, N,N'-methylenebisacrylamide, N,N-dimethylaminopropyl acrylamide, N,N-dimethylaminopropyl methacrylamide, and diacetone acrylamide. The amide group-containing monomers can be used alone or as a mixture of two or more kinds thereof.

Examples of the cyano group-containing monomer include acrylonitrile and methacrylonitrile.

Examples of the vinyl group-containing monomer include vinyl esters such as vinyl acetate, vinyl propionate, and vinyl laurate. Vinyl acetate is particularly preferred.

Examples of the aromatic vinyl monomer include styrene, chlorostyrene, chloromethylstyrene, $\alpha$-methylstyrene, and other substituted styrene.

Examples of the imide group-containing monomer include cyclohexyl maleimide, isopropyl maleimide, N-cyclohexyl maleimide, and itaconimide.

Examples of the amino group-containing monomer include aminoethyl (meta)acrylate, N,N-dimethylaminoethyl (meth)acrylate, and N,N-dimethylaminopropyl (meth)acrylate.

Examples of the epoxy group-containing monomer include glycidyl (meth)acrylate, methylglycidyl (meth)acrylate, and allyl glycidyl ether.

Examples of the vinyl ether monomer include methyl vinyl ether, ethyl vinyl ether, and isobutyl vinyl ether.

The proportion of the polar group-containing monomer to total monomer components (100% by mass) constituting the acrylic polymer is preferably 0.1% by mass or more and 30% by mass or less. The upper limit of the proportion of the polar group-containing monomer is more preferably 25% by mass, still more preferably 20% by mass, and particularly preferably 15% by mass. The lower limit of the proportion is more preferably 0.5% by mass, still more preferably 1% by mass, and particularly preferably 2% by mass. When the proportion of the polar group-containing monomer is 0.1% by mass or more, a cohesive force is easy to be obtained. Therefore, adhesive residue is difficult to occur on the surface of an adherend after debonding the adhesive layer, and effects of wettability and adhesiveness of the surface of the adherend after debonding are easy to be obtained. In addition, when the proportion of the polar group-containing monomer is 30% by mass or less, the adhesive layer is easy to be prevented from excessively adhering to the adherend and becoming a heavy debonding type. In particular, when the proportion is 2% by mass or more and 15% by mass or less, both debondability of the adhesive layer and adhesion between the surface of the adherend and another layer are easy to be achieved.

The monomer components constituting the acrylic polymer may contain a polyfunctional monomer from the standpoint that a crosslinked structure is introduced in the acrylic polymer, making it easy to obtain necessary cohesive force.

Examples of the polyfunctional monomer include ethylene glycol di(meth)acrylate, diethylene glycol di(meth)acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, divinylbenzene, and N,N'-methylene bisacrylamide. The polyfunctional monomers can be used alone or as a mixture of two or more kinds thereof.

The content of the polyfunctional monomer to total monomer components (100 parts by mass) constituting the acrylic polymer is preferably 0.1 parts by mass or more and 15 parts by mass or less. The upper limit of the content of the polyfunctional monomer is more preferably 10 parts by mass, and the lower limit thereof is more preferably 3 parts by mass. When the content of the polyfunctional monomer is 0.1 parts by mass or more, flexibility and adhesiveness of the adhesive layer are easy to be improved, and this is preferred. When the content of the polyfunctional monomer is 15 parts by mass or less, a cohesive force is not excessively high, and appropriate adhesiveness is easy to be obtained.

The polymer in the present invention can be obtained by (co)polymerizing the monomer components. The polymerization method is not particularly limited, and examples thereof include solution polymerization, emulsion polymerization, bulk polymerization, suspension polymerization, and photopolymerization (active energy ray polymerization) methods. The solution polymerization method is preferred from the standpoint of costs and productivity. When the monomer components have been copolymerized, the resulting copolymer may be any of a random copolymer, a block copolymer, an alternating copolymer, and a graft copolymer.

The solution polymerization method is not particularly limited, and examples thereof include a method in which monomer components, a polymerization initiator, and the like are dissolved in a solvent, heated, and polymerized to obtain a polymer solution containing a polymer.

As the solvent used in the solution polymerization method, various common solvents can be used. Examples of those solvents (polymerization solvents) include organic solvents, for example, aromatic hydrocarbons such as toluene, benzene, and xylene; esters such as ethyl acetate and n-butyl acetate; aliphatic hydrocarbons such as n-hexane and n-heptane; alicyclic hydrocarbons such as cyclohexane and methyl cyclohexane; and ketones such as methyl ethyl ketone and methyl isobutyl ketone. The solvent can be used alone or as a mixture of two or more kinds thereof.

The amount of the solvent used is not particularly limited, but it is preferably 10 parts by mass or more and 1000 parts by mass or less to total monomer components (100 parts by mass) constituting the polymer. The upper limit of the amount of the solvent used is more preferably 500 parts by mass and the lower limit thereof is more preferably 50 parts by mass.

The polymerization initiator used in the solution polymerization method is not particularly limited, but examples thereof include a peroxide-based polymerization initiator and an azo-based polymerization initiator. The peroxide-based polymerization initiator is not particularly limited, but examples thereof include peroxycarbonate, ketone peroxide, peroxy ketal, hydroperoxide, dialkyl peroxide, diacyl peroxide and peroxy esters, and more specifically include benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane. The azo-based polymerization initiator is not particularly limited, but examples thereof include 2,2'-azobisisobutyronitrile, 2,2'-azobis-2-methylbutyronitrile, 2,2'-azobis(2,4-dimethylvaleronitrile), 2,2'-azobis(2-methylpropionic acid)dimethyl, 2,2'-azobis(4-methoxy-2,4-dimethylvaleronitrile), 1,1'-azobis(cyclohexane-1-carbonitrile), 2,2'-azobis(2,4,4-trimethylpentane), 4,4'-azobis-4-cyanovaleric acid, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) hydrochloride, and 2,2'-azobis[N-(2-carboxyethyl)-2-methylpropionamidine] hydrate. The polymerization initiator can be used alone as a mixture of two or more kinds thereof.

The amount of the polymerization initiator used is not particularly limited, but is preferably 0.01 parts by mass or more and 5 parts by mass or less, to total monomer components (100 parts by mass) constituting the polymer. The upper limit of the amount of the polymerization initiator used is more preferably 3 parts by mass, and the lower limit thereof is more preferably 0.05 parts by mass.

The heating temperature when heating and polymerizing in the solution polymerization method is not particularly limited, but is, for example, 50°C or higher and 80°C or lower. The heating time is not particularly limited, but is, for example, 1 hour or longer and 24 hours or shorter.

The weight average molecular weight of the polymer (particularly, the acrylic polymer) is not particularly limited, but is preferably 100,000 or larger and 5,000,000 or smaller. The upper limit of the weight average molecular weight is more preferably 4,000,000 and still more preferably 3,000,000, and the lower limit thereof is more preferably 200,000 and still more preferably 300,000. When the weight average molecular weight is 100,000 or larger, disadvantages that the cohesive force becomes small, an adhesive residue remains on the surface of the adherend after debonding the adhesive layer, and effects of wettability and adhesiveness of the surface of the adherend after debonding are not obtained can be effectively suppressed. On the other hand, when the weight average molecular weight is 5,000,000 or smaller, the disadvantage that wettability of the surface of the adherend after debonding the adhesive layer becomes insufficient can be effectively suppressed.

The weight average molecular weight is obtained by measuring with a gel permeation chromatography (GPC) method. More specifically, for example, the weight average molecular weight can be measured using "HLC-8220GPC"

(trade name, manufactured by Tosoh Corporation) as a GPC measuring device, under the following conditions and calculated from a standard polystyrene conversion value.

(Conditions for Measuring Weight Average Molecular Weight)

Sample concentration: 0.2% by mass (tetrahydrofuran solution)
Sample injection amount: 10 μL
Sample column: TSK guard column Super HZ-H (1 piece)+TSK gel Super HZM-H (2 pieces)
Reference column: TSK gel Super H-RC (1 piece)
Eluent: tetrahydrofuran (THF)
Flow rate: 0.6 mL/min
Detector: differential refractometer (RI)
Column temperature (measurement temperature): 40°C

The glass transition temperature (Tg) of the polymer (particularly, the acrylic polymer) is not particularly limited. However, when the glass transition temperature is 0°C or lower, the decrease in an initial adhesion force can be suppressed, and this is preferred. The glass transition temperature is more preferably -10°C or lower, and still more preferably - 20°C or lower. Furthermore, when the glass transition temperature is -40°C or lower, adhesive force during applying voltage is particularly decreased as compared with initial adhesive force. In other words, electrical debondability is particularly satisfactory, and this is particularly preferred. The glass transition temperature is particularly preferably -50°C or lower.

The glass transition temperature (Tg) can be calculated, for example, based on the following Formula (Y) (Fox formula).

$$1/Tg = W1 / Tg1 + W2 / Tg2 + ... + Wn / Tgn \qquad (Y)$$

[In Formula (Y), Tg represents a glass transition temperature (unit: K) of the polymer, Tgi (i=1, 2, ... n) represents a glass transition temperature (unit: K) of the polymer when a monomer i has formed a homopolymer, and Wi (i=1, 2, ... n) represents a weight fraction in the total monomer components of the monomer i]

Formula (Y) is a calculation formula in case where the polymer is formed of n kinds (monomer 1, monomer 2, ... monomer n) of monomer components.

The glass transition temperature when the homopolymer has been formed means a glass transition temperature of a homopolymer of the monomer and means a glass transition temperature (Tg) of a polymer that is formed of only a certain monomer (referred to as "monomer X" in some cases) as the monomer component. Specifically, numerical values are exemplified in "Polymer Handbook" (Third Edition, John Wiley & Sons, Inc, 1989). The glass transition temperature (Tg) of a homopolymer not described in the above-described literature is, for example, a value obtained by the following measuring method. That is, 100 parts by mass of the monomer X, 0.2 parts by mass of 2,2'-azobisisobutyronitrile, and 200 parts by mass of ethyl acetate as a polymerization solvent are put into a reactor equipped with a thermometer, a stirrer, a nitrogen inlet tube, and a reflux condenser, and are stirred for 1 hour while introducing a nitrogen gas. In this manner, oxygen in a polymerization system is removed, and then, a temperature is raised to 63°C and a reaction is performed for 10 hours. Next, the temperature is cooled to room temperature to obtain a homopolymer solution having a solid concentration of 33% by mass. Next, the homopolymer solution is applied on a release liner by flow casing, and dried to prepare a test sample (sheet-like homopolymer) having a thickness of approximately 2 mm. Then, approximately 1 to 2 mg of the test sample is weighed into an open cell made of aluminum to obtain the behavior of reversing heat flow (specific heat component) of the homopolymer using a temperature-modulated DSC (trade name "Q-2000" manufactured by TA Instruments) at a temperature rising rate of 5°C/min in 50 ml/min of a nitrogen atmosphere. By reference to JIS-K-7121, a temperature at the point where a straight line equidistant in a vertical axis direction from straight lines which are obtained by extending a baseline on a high temperature side and a baseline on the low temperature side of the obtained reversing heat flow, intersects with a curve of a portion in which the glass transition changes stepwise is set as the glass transition temperature (Tg) when the homopolymer has been formed.

The solubility parameter of the polymer is not particularly limited, but is preferably 9.4 or more and is preferably 11.0 or less and more preferably 10.0 or less.

The solubility parameter (SP value) is generally used as an index showing polarity of a compound, and in the present invention, means a value calculated using the following formula (2) contrived by Fedors.

$$\text{SP value} = (\Sigma\Delta e_i / \Sigma\Delta v_i)^{1/2} \qquad (2)$$

In the above formula, $\Delta e_i$ is evaporation energy of an atom or an atomic group, and $\Delta v_i$ is molar volume of an atom or an atomic group. Those values can be obtained from, for example, Journal of Adhesion Society of Japan, Vol. 22, No. 10 (1986), p.566.

The content of the polymer in the adhesive composition of the present invention is preferably 50% by mass or more and 99.9% by mass or less, to the total amount (100% by mass) of the adhesive composition. The upper limit of the content is more preferably 99.5% by mass and still more preferably 99% by mass, and the lower limit thereof is more preferably 60% by mass and still more preferably 70% by mass.

(Ionic liquid)

The ionic liquid in the present invention is constituted of a pair of an anion and a cation, and is not particularly limited so long as it is a molten salt that is liquid at 25°C (ordinary temperature molten salt).

The anion of the ionic liquid includes, for example, $(FSO_2)_2N^-$, $(CF_3SO_2)_2N^-$, $(CF_3CF_2SO_2)_2N^-$, $(CF_3SO_2)_3C^-$, $Br^-$, $AlCl_4^-$, $Al_2Cl_7^-$, $NO_3^-$, $BF_4^-$, $PF_6^-$, $CH_3COO^-$, $CF_3COO^-$, $CF_3CF_2CF_2COO^-$, $CF_3SO_3^-$, $CF_3(CF_2)_3SO_3^-$, $AsF_6^-$, $SbF_6^-$ and $F(HF)_n^-$. Above all, anions of a sulfonyl imide-based compound such as $(FSO_2)_2N^-$ [bis(fluorosulfonyl)imide an ion] or $(CF_3SO_2)_2N^-$ [bis(trifluoromethanesulfonyl)imide anion] are chemically stable as an anion and are suitable in achieving electrical debonding of the adhesive layer. Therefore, those anions are preferred.

As the cation of the ionic liquid, nitrogen-containing onium, sulfur-containing onium and phosphorus-containing onium cations are chemically stable and suitable in achieving electrical debonding of the adhesive layer. Therefore, those cations are preferred. Imidazolium-based, ammonium-based, pyrrolidinium-based and pyridinium-based cations are more preferred.

The imidazolium-based cation includes, for example, 1-methylimidazolium cation, 1-ethyl-3-methylimidazolium cation, 1-propyl-3-methylimidazolium cation, 1-burtyl-3-methylimidazolium cation, 1-pentyl-3-methylimidazolium cation, 1-hexyl-3-methylimidazolium cation, 1-heptyl-3-methylimidazolium cation, 1-octyl-3-methylimidazolium cation, 1-nonyl-3-methylimidazolium cation, 1-undecyl-3-methylimidazolium cation, 1-dodecyl-3-methylimidazolium cation, 1-tridecyl-3-methylimidazolium cation, 1-tetradecyl-3-methylimidazolium cation, 1-pentadecyl-3-methylimidazolium cation, 1-hexadecyl-3-methylimidazolium cation, 1-heptadecyl-3-methylimidazolium cation, 1-octadecyl-3-methylimidazolium cation, 1-undecyl-3-methylimidazolium cation, 1-benzyl-3-methylimidazolium cation, 1-butyl-2,3-dimethylimidazolium cation, and 1,3-bis(dodecyl)imidazolium cation.

The pyridinium-based cation includes, for example, 1-butylpyridinium cation, 1-hexylpyridinium cation, 1-butyl-3-methylpyridinium cation, 1-butyl-4-methylpyridinium cation, and 1-octyl-4-methylpyridinium cation.

The pyrrolidinium-based cation includes, for example, 1-ethyl-1-methylpyrrolidium cation, and 1-butyl-1-methylpyrrolidium cation.

The ammonium-based cation includes, for example, tetraethylammonium cation, tetrabutylammonium cation, methyltrioctylammonium cation, tetradecytrihexylammonium cation, glycidyltrimethylammonium cation, and trimethylaminoethyl acrylate cation.

The ionic liquid is preferably that a cation having a molecular weight of 160 or less is selected as the constituent cation from the standpoint that high electric debondability is achieved in the adhesive layer by utilizing high diffusibility of a cation, that is, adhesive force during applying a voltage is greatly decreased as compared with initial adhesive force. The ionic liquid containing the above-described $(FSO_2)_2N^-$ [bis(fluorosulfonyl)imide anion] or $(CF_3SO_2)_2N^-$ [bis(trifluoromethanesulfonyl)imide anion] and a cation having a molecular weight of 160 or less is particularly preferred. The cation having a molecular weight of 160 or less includes, for example, 1-methylimidazolium cation, 1-ethyl-3-methylimidazolium cation, 1-propyl-3-methylimidazolium cation, 1-burtyl-3-methylimidazolium cation, 1-pentyl-3-methylimidazolium cation, 1-butylpyridinium cation, 1-hexylpyridinium cation, 1-butyl-3-methylpyridinium cation, 1-butyl-4-methylpyridinium cation, 1-ethyl-1-methylpyrrolidium cation, 1-butyl-1-methylpyrrolidium cation, tetraethylammonium cation, glycidyltrimethylammonium cation, and trimethylaminoethyl acrylate cation.

The cations represented by the following Formulas (2-A) to (2-D) are preferred as the cation in the ionic liquid.

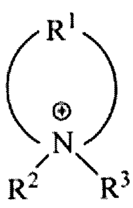
(2-A)

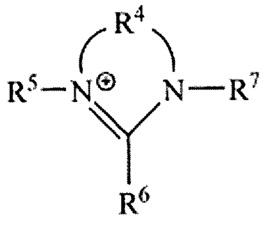
(2-B)

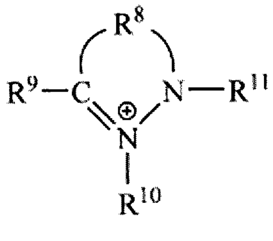
(2-C)

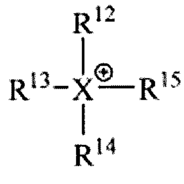
(2-D)

In Formula (2-A), $R^1$ represents a hydrocarbon group having 4 to 10 carbon atoms (preferably a hydrocarbon group having 4 to 8 carbon atoms and more preferably a hydrocarbon group having 4 to 6 carbon atoms) and may contain a hetero atom, $R^2$ and $R^3$ which may be the same or different represent a hydrogen atom or a hydrocarbon group having 1 to 12 carbon atoms (preferably a hydrocarbon group having 1 to 8 carbon atoms, more preferably a hydrocarbon group having 2 to 6 carbon atoms, and still more preferably a hydrocarbon group having 2 to 4 carbon atoms), and may contain a hetero atom. In case where a nitrogen atom forms a double bond with an adjacent carbon atom, $R^3$ is not present.

In Formula (2-B), $R^4$ represents a hydrocarbon group having 2 to 10 carbon atoms (preferably a hydrocarbon group having 2 to 8 carbon atoms and more preferably a hydrocarbon group having 2 to 6 carbon atoms) and may contain a hetero atom, and $R^5$, $R^6$, and $R^7$ which may be the same or different represent a hydrogen atom or a hydrocarbon group having 1 to 12 carbon atoms (preferably a hydrocarbon group having 1 to 8 carbon atoms, more preferably a hydrocarbon group having 2 to 6 carbon atoms, and still more preferably a hydrocarbon group having 2 to 4 carbon atoms), and may contain a hetero atom.

In Formula (2-C), $R^8$ represents a hydrocarbon group having 2 to 10 carbon atoms (preferably a hydrocarbon group having 2 to 8 carbon atoms and more preferably a hydrocarbon group having 2 to 6 carbon atoms) and may contain a hetero atom, and $R^9$, $R^{10}$, and $R^{11}$ which may be the same as or different represent a hydrogen atom or a hydrocarbon group having 1 to 16 carbon atoms (preferably a hydrocarbon group having 1 to 10 carbon atoms and more preferably a hydrocarbon group having 1 to 8 carbon atoms), and may contain a hetero atom.

In Formula (2-D), X represents a nitrogen atom, a sulfur atom or a phosphorus atom, and $R^{12}$, $R^{13}$, $R^{14}$, and $R^{15}$ which may be the same or different represent a hydrocarbon group having 1 to 16 carbon atoms (preferably a hydrocarbon group having 1 to 14 carbon atoms, more preferably a hydrocarbon group having 1 to 10 carbon atoms, still more preferably a hydrocarbon group having 1 to 8 carbon atoms, and particularly preferably a hydrocarbon group having 1 to 6 carbon atoms), and may contain a hetero atom. In case where X is a sulfur atom, $R^{12}$ is not present.

The molecular weight of the cation of the ionic liquid is, for example, 500 or less, preferably 400 or less, more preferably 300 or less, still more preferably 250 or less, particularly preferably 200 or less and most preferably 160 or less. On the other hand, the molecular weight is generally 50 or more. It is considered that the cation of the ionic liquid has the property to move to a cathode side in the adhesive layer when applying voltage and deviate to the vicinity of the interface between the adhesive layer and an adherend. For this reason, in the present invention, the adhesive force during application of voltage is decreased as compared with an initial adhesive force, and electrical debonding occurs. The cation having small molecular weight of 500 or less is further easy to move to the cathode side in the adhesive layer, and is preferred in achieving electrical debonding of the adhesive layer.

Commercially available products of the ionic liquid include, for example, "ELEXCEL AS-110", "ELEXCEL MP-442", "ELEXCEL IL-210", "ELEXCEL MP-471", "ELEXCEL MP-456" and "ELEXCEL AS-804" (trade names, manufactured by DKS Co. Ltd.); "HMI-FSI" (trade name, manufactured by Mitsubishi Materials Corporation); and "CIL-312" and "CIL-313" (trade names, manufactured by Japan Carlit Co., Ltd.)

The ionic conductivity of the ionic liquid is preferably 0.1 mS/cm or more and 10 mS/cm or less. The upper limit of the ionic conductivity is more preferably 5 mS/cm, and still more preferably 3 mS/cm, and the lower limit thereof is more preferably 0.3 mS/cm, and still more preferably 0.5 mS/cm. When the ionic liquid has the ionic conductivity of this range, the adhesive force is sufficiently decreased even in low voltage and sufficient debondability is obtained. The ionic conductivity can be measured by AC impedance method using, for example, 1260 frequency response analyzer manufactured by Solartron.

The content (mixing amount) of the ionic liquid in the adhesive composition of the present invention is preferably 0.5 parts by mass or more per 100 parts by mass of the polymer from the standpoint of decreasing the adhesive force during applying voltage and is preferably 30 parts by mass or less to 100 parts by weight of the polymer from the standpoint of the adhesive force when voltage is not applied. From the same standpoints, the content is more preferably 20 parts by mass or less, still more preferably 15 parts by mass or less, particularly preferably 10 parts by mass or less and most preferably 5 parts by mass or less. On the other hand, the content is more preferably 0.6 parts by mass or more, still more preferably 0.8 parts by mass or more, particularly preferably 1.0 part by mass or more and most preferably 1.5 parts by mass or more.

(Additives)

An adhesive composition of the present invention can further contain additives such as a carbodiimide compound, a chelate-forming metal deactivator and an adsorptive inhibitor. Those additives can be used alone or as a mixture of two or more kinds thereof. In the present invention, the suitable corrosion resistance described hereinafter can be achieved by controlling the kind and content of additives to the suitable ranges, and in addition, the suitable electrical debondability described hereinafter can be achieved by controlling those to further suitable ranges. The additives are described in detail below.

<Carbodiimide compound>

The carbodiimide compound is a component to be added to the adhesive composition as, for example, a crosslinking agent. It is considered that one reason of the corrosion of a metal adherend surface is that $H^+$ generated by the interaction between a carboxyl group in the polymer and a cation in the ionic liquid reacts with a metal. However, in case where the carbodiimide compound has been used as an additive, it is considered that the carboxyl group in the polymer reacts with the carbodiimide compound, the carboxyl group disappears, the generation of H+ is suppressed and as a result, corrosion is suppressed.

The carbodiimide compound is a compound having a functional group (carbodiimide group) represented by -N=C=N-, and examples thereof include 1-[3-(dimethylamino)propyl]-3-ethyl carbodiimide, 1-ethyl-3-(3-dimethylaminopropyl)-carbodiimide, N,N'-dicyclohexyl carbodiimide, N,N'-diisopropyl carbodiimide, 1-ethyl-3-tert-butyl carbodiimide, N-cyclohexyl-N'-(2-morpholinoethyl)carbodiimide, N,N'-di-tert-butyl carbodiimide, 1,3-bis(p-tolyl)carbodiimide, and polycarbodiimide resins using those compounds as a monomer. Those carbodiimide compounds can be used alone or as a mixture of two or more kinds thereof.

The carbodiimide compound that can be used includes, for example, "CARBODILITE V-03", "CARBODILITE V-05", "CARBODILITE V-07", "CARBODILITE V-09" and "Elastotab H01" manufactured by Nisshinbo Chemical Inc.

When the carbodiimide compound is used as an additive, its content (mixing amount) is preferably 0.01 parts by mass or more per 100 parts by mass of the polymer from the standpoint of obtaining the corrosion inhibition effect and is preferably 10 parts by mass or less per 100 parts by mass of the polymer from the standpoint of adhesive force when voltage is not applied.

The content of the carbodiimide compound is more preferably 0.1 parts by mass or more, still more preferably 0.2 parts by mass or more, and particularly preferably 0.5 parts by mass or more, per 100 parts by mass of the polymer. When the content is within the ranges, further satisfactory corrosion resistance can be obtained.

On the other hand, the content of the carbodiimide compound is more preferably 7 parts by mass or less, still more preferably 4 parts by mass or less, and particularly preferably 2 parts by mass or less, per 100 parts by mass of the polymer. When the content is within the ranges, electrical debondability in addition to the corrosion inhibition effect is excellent.

When the carbodiimide compound is used, an isocyanate-based crosslinking agent may be used in combination with the carbodiimide compound. Gel fraction in the adhesive layer when stored in high temperature and high humidity environment for a long period of time is difficult to be decreased by using those in combination. The content (mixing amount) of the isocyanate-based crosslinking agent is, for example, 0.01 parts by mass or more and 10 parts by mass or less, per 100 parts by mass of the polymer. The isocyanate-based crosslinking agent that can be used includes "CORONATE L" manufactured by Tosoh Corporation.

<Adsorptive inhibitor>

The adsorptive inhibitor is a compound that is physically and chemically adsorbed on a metal surface to form a protective film and inhibits corrosion of a metal. The adsorptive inhibitor includes, for example, alkylamine, a carboxylic acid salt, a carboxylic acid derivative and an alkylphosphoric acid salt. The adsorptive inhibitor can be used alone or as a mixture of two or more kinds thereof.

The alkylamine includes a primary amine, a secondary amine, a tertiary amine and the like. The alkylamine includes, for example, an amine having an alkyl group having 1 to 25 carbon atoms, and preferably an amine having an alkyl group having 3 to 20 carbon atoms. The alkyl group may have a branched chain, and may be a cyclic group such a cycloalkyl group. However, a straight chain alkyl group is preferred. The alkyl group may has a substituent, and the substituent includes, for example, a hydroxyl group, a carboxyl group, and an alkoxy group. The alkyl group preferably does not have a substituent. The primary amine includes, for example, propylamine, butylamine, pentylamine, hexylamine, heptylamine, octylamine, nonylamine, decylamine, undecylamine, laurylamine, triedcylamine, tetradecyamine, pentadecylamine, stearylamine, heptadecylamine, and octadecyalime. The secondary amine includes, for example, dicyclohexylamine, diethylamine, dipropylamine, dibutylamine, dihexylamine, dilaurylamine, distearylamine, and diethanolamine. The tertiary amine includes, for example, imidazoline derivative, trimethylamine, triethylamine, tripropyamine, tributylamine, dimethyloctyamine, dimethyldecylamine, dimethyllaurylamine, dimethyloctylamine, dimethylcoconutamine, dimethylmyristylamine, dimethylpalmitylamine, dimethylstearylamine, dimethylbehenylamine, dilaurylmonomethylamine, and N,N,N',N'-tetramethyl-2,2-dimethyl-1,3-propanediamine. These alkylamines can be used alone or as a combination of two or more kinds thereof.

As the primary amine, for example, "FARMIN 08D", "FARMIN 20D", "FARMIN 80", "FARMIN 86T", and "FARMIN CS", manufactured by Kao Corporation can be used. As the tertiary amine, for example, "FARMIN DM0898", "FARMIN DM1098", "FARMIN DM2098", "FARMIN DM2285", "FARMIN DM2458", "FARMIN DM2463", "FARMIN DM24C", "FARMIN DM4098", "FARMIN DM4255", "FARMIN DM6098", "FARMIN DM6875", "FARMIN DM8098", "FARMIN

DM8680", and "FARMIN M2-2095", manufactured by Kao Corporation can be used.

When the alkylamine is used, its content (mixing amount) is preferably 0.01 parts by mass per 100 parts by mass of the polymer from the standpoint of obtaining corrosion inhibition effect, and is preferably 20 parts by mass or less per 100 parts by mass of the polymer from the standpoint of adhesive force when a voltage is not applied and the standpoint of decreasing adhesive force during applying a voltage.

The upper limit of the content (mixing amount) of the alkylamine is more preferably 15 parts by mass, sill more preferably 10 parts by mass, and particularly preferably 5 parts by mass, and the lower limit thereof is more preferably 0.1 parts by mass, still more preferably 0.2 parts by mass, particularly preferably 0.5 parts by mass, and most preferably 0.8 parts by mass.

The carboxylic acid salt includes, for example, disodium sebacate and other sodium salts.

As the disodium sebacate, for example, "M138C" manufactured by CORTEC, and "Irgacor DSS G" manufactured by BASF can be used.

When the carboxylic acid salt is used, its content (mixing amount) is preferably 0.01 parts by mass or more per 100 parts by mass of the polymer from the standpoint of obtaining corrosion inhibition effect, and is preferably 10 parts by mass or less per 100 parts by mass of the polymer from the standpoint of adhesive force when a voltage is not applied and the standpoint of decreasing adhesive force during applying a voltage.

Other examples of the adsorptive inhibitor includes a carboxylic acid derivative. The carboxylic acid derivative includes, for example, a succinic acid derivative such as alkenyl succinic acid half ester. As the alkenyl succinic acid half ester, for example, "Irgacoe L12" manufactured by BASF can be used.

When the carboxylic acid derivative is used, its content (mixing amount) is preferably 0.01 parts by mass or more per 100 parts by mass of the polymer from the standpoint of obtaining corrosion inhibition effect, and is preferably 10 parts by mass or less per 100 parts by mass of the polymer from the standpoint of adhesive force when a voltage is not applied and the standpoint of decreasing adhesive force during applying a voltage.

Other examples of the adsorptive inhibitor includes an alkyl phosphoric acid salt. As the alkyl phosphoric acid, for example, "CORROMIN W" manufactured by Kao Corporation can be used.

When the alkyl phosphoric acid salt is used, its content (mixing amount) is preferably 0.01 parts by mass or more per 100 parts by mass of the polymer from the standpoint of obtaining corrosion inhibition effect, and is preferably 10 parts by mass or less per 100 parts by mass of the polymer from the standpoint of adhesive force when a voltage is not applied and the standpoint of decreasing adhesive force during applying a voltage.

<Chelate-forming metal deactivator>

The chelate-forming metal deactivator is a compound that forms a protective film by forming a complex salt on a metal surface and inhibits corrosion of a metal. As the chelate-forming metal deactivator, for example, a triazole group-containing compound or a benzotriazole group-containing compound can be used. Those compounds are preferred since they have high action of inactivating the surface of a metal such as aluminum, and additionally are difficult to affect adhesiveness even when contained in an adhesive component.

The triazole group-containing compound includes, for example, 1,2,4-triazole, 1,2,3-triazole, 4-amino-1,2,4-triazole, and N,N-bis(2-ethylhexyl)-1,2,4-triazol-1-yl methaneamine. Benzotriazole group-containing compound includes, for example, 1,2,3-benzotriazole, methylbenzotriazole, methylbenzotriazole potassium salt, carboxybenzotriazole, 1-[N,N-bis(2-ethylhexyl)aminomethyl]benzotriazole, 3-(N-salycyloyl)amino-1,2-4-triazole, 2,2'-[[(methyl-1H-benzotriazol-1yl)methyl]imino]-bisethanol, 2-(2'-hydroxy-5'-methylphenyl)benzotriazole, 2-(2'-hydroxy-5'-tert-octylphenyl)benzotriazole, 2-(2'-hydroxy-3',5'-di-tert-amylphenyl)benzotriazole, 1-(methoxymethyl)-1H-benzotriazole, 1H-benzotriazole-1-methanol, and 1-(chloromethyl)-1H-benzotriazole.

As the chelate-forming metal deactivator, for example, "Irgamet 30", "Irgamet 39" and "Irgamet 42" (trade names), manufactured by BASF, and "M238" manufactured by CORTEC can be used.

When the chelate-forming metal deactivator is used, its content (mixing amount) is preferably 0.01 parts by mass or more per 100 parts by mass of the polymer from the standpoint of obtaining corrosion inhibition effect, and is preferably 20 parts by mass or less per 100 parts by mass of the polymer from the standpoint of decreasing adhesive force during applying a voltage. The upper limit of the content (mixing amount) of the chelate-forming metal deactivator is more preferably 15 parts by mass, still more preferably 9 parts by mass, particularly preferably 5 parts by mass, and most preferably 3 parts by mass, and the upper limit thereof is more preferably 0.1 parts by mass, still more preferably 0.2 parts by mass, particularly preferably 0.5 parts by mass, and most preferably 0.8 parts by mass.

The total content (mixing amount) of the additives is preferably 0.01 parts by mass or more per 100 parts by mass of the polymer from the standpoint of obtaining corrosion inhibition effect, and is preferably 30 parts by mass or less per 100 parts by mass of the polymer from the standpoint of adhesive force when a voltage is not applied. For the same reason as above, the total content is more preferably 20 parts by mass or less, still more preferably 15 parts by mass or less, particularly preferably 10 parts by mass or less, and most preferably 5 parts by mass or less. Furthermore,

the total content is more preferably 0.1 parts by mass or more, still more preferably 0.2 parts by mass or more, particularly preferably 0.5 parts by mass or more, and most preferably 0.8 parts by mass or more. When two or more kinds of the additives are used, the total content (mixing amount) of the additives is the total content (mixing amount) of those additives.

(Crosslinking Agent)

The adhesive composition of the present invention may contain a crosslinking agent other than carbodiimide compound, as needed, for the purpose of improving creeping property or shearing property by crosslinking the polymers. The crosslinking agent include, for example, an isocyanate-based crosslinking agent, an epoxy-based crosslinking agent, a melamine-based crosslinking agent, a peroxide-based crosslinking agent, a urea-based crosslinking agent, a metal alkoxide-based crosslinking agent, a metal chelate-based crosslinking agent, a metal salt-based crosslinking agent, an oxazoline-based crosslinking agent, an aziridine-based crosslinking agent, and an amine-based crosslinking agent, described above. The isocyanate-based crosslinking agent includes, for example, toluene diisocyanate and methylene bisphenyl isocyanate. The epoxy-based crosslinking agent includes, for example, N,N,N',N'-tetraglycidyl-m-xylenediamine, diglycidylaniline, 1,3-bis(N,N-diglycidylaminomethyl) cyclohexane, and 1,6-hexanediol diglycidyl ether. The content of the crosslinking agent other than the carbodiimide compound is preferably 0.1 parts by mass or more and 50 parts by mass or less, per 100 parts by mass of the polymer. The crosslinking agent can be used alone or as a mixture of two or more kinds thereof.

(Polyethylene Glycol)

The adhesive composition of the present invention may contain polyethylene glycol, as needed, for the purpose of assisting the movement of the ionic liquid when applying a voltage. As the polyethylene glycol, polyethylene glycol having a number average molecular weight of 200 to 6,000 can be used. The content of the polyethylene glycol is preferably 0.1 parts by mass or more and 30 parts by mass or less, per 100 parts by mass of the polymer.

(Conductive Filler)

The adhesive composition of the present invention may contain conductive filler, as needed, for the purpose of imparting conductivity to the adhesive composition. The conductive filler is not particularly limited, and as the filler, the general and/or conventional conductive fillers can be used. For example, graphite, carbon black, carbon fiber, and a metal powder such as silver or copper can be used. The content of the conductive filler is preferably 0.1 parts by mass or more and 200 parts by mass or less, per 100 parts by mass of the polymer.

(Other additives)

Other than the above-described components, the adhesive composition of the present invention can contain, as needed, various additives (hereinafter sometimes referred to as "other components") such as a filler, a plasticizer, an age resister, an antioxidant, a pigment (a dye), a flame retardant, a solvent, a surfactant (leveling agent), a rust inhibitor, a tackifying resin, and an antistatic agent. The other additives can be used alone or as a mixture of two or more kinds thereof.

The filler includes, for example, silica, iron oxide, zinc oxide, aluminum oxide, titanium oxide, barium oxide, magnesium oxide, calcium carbonate, magnesium carbonate, zinc carbonate, agalmatolite clay, kaolin clay, and calcined clay.

As the plasticizer, the conventional plasticizers that are used the general resins can be used. The plasticizer includes, for example, oils such as paraffin oil and process oil; liquid rubber such as liquid polyisoprene, liquid polybutadiene, and liquid ethylene-propylene rubber; tetrahydrophthalic acid, azelaic acid, benzoic acid, phthalic acid, trimellitic acid, pyromellitic acid, adipic acid, sebacic acid, fumaric acid, maleic acid, itaconic acid, citric acid and derivatives thereof; dioctyl phthalate (DOP), dibutyl phthalate (DBP), dioctyl adipate, diisononyl adipate (DINA), and isodecyl succinate.

The age resister includes, for example, hindered phenol-based or aliphatic and aromatic hindered amine-based compounds.

The antioxidant includes, for example, butylhydroxytoluene (BHT) and butylhydroxyanisole (BHA).

The pigment includes, for example, an inorganic pigment such as titanium dioxide, zinc oxide, ultramarine, red iron oxide, lithopone, lead, cadmium, iron, cobalt, aluminum, hydrochloride or sulfate, and an organic pigment such as an azo pigment or a copper phthalocyanine pigment.

The rust inhibitor includes, for example, zinc phosphate, tannic acid derivative, phosphate, basic sulfonate, and various rust preventive pigments.

The adhesion-imparting agent includes, for example, a titanium coupling agent and zirconium coupling agent.

The antistatic agent includes, in general, a quaternary ammonium salt and a hydrophilic compound such as polyglycolic acid or ethylene oxide derivative.

The tackifying resin includes, for example, a polyamide-based tackifying resin, an epoxy-based tackifying resin and an elastomer-based tackifying resin, in addition to a rosin-based tackifying resin, a terpene-based tackifying resin, a phenol-based tackifying resin, a hydrocarbon-based tackifying resin and a ketone-based tackifying resin. The tackifying resin can be used alone or as a mixture of two or more kinds.

The total content (mixing amount) of these other additives is not particularly limited, but is preferably 0.01 parts by mass or more and 20 parts by mass or less, more preferably 10 parts by mass or less, and still more preferably 5 parts by mass or less, per 100 parts by mass of the polymer.

In the adhesive composition of the present invention, the content of a compound having a hydrocarbon-based aromatic skeleton is preferably 0.9% by weight or less, and in this case, electrical debondability tends to be excellent. The compound having a hydrocarbon-based aromatic skeleton includes a compound having a benzotriazole skeleton. Incidentally, the benzotriazole group-containing compound described before has a trizole skeleton that is a nitrogen-containing hetero ring, but does not have a hydrocarbon-based aromatic skeleton. Therefore, the benzotriazole group-containing compound does not fall into the category of the compound having a hydrocarbon-based aromatic skeleton.

(Corrosive properties of electrically debondable adhesive composition)

The adhesive composition containing the components described above of the present invention has low corrosive properties to a metal. In other words, corrosion of a metal surface is difficult to cause even in case where the adhesive composition of the present invention is placed in high temperature and high humidity environment in the state that the adhesive composition has been brought into contact with a metal.

Corrosive properties of the adhesive composition of the present invention can be evaluated by various methods. For example, the corrosive properties can be evaluated by the proportion of corrosion area of an aluminum-deposited film after adhering an electrically debondable adhesive layer formed by the electrically debondable adhesive composition of the present invention to the aluminum-deposited film and storing the resulting laminate in a thermostatic chamber having a temperature of 85°C and a humidity of 85% RH for 24 hours.

Specifically, the adhesive composition of the present invention is applied to a release-treated surface of a polyethylene terephthalate separator ("MRF38" (trade name) manufactured by Mitsubishi Plastics, Inc.) having the release-treated surface using an applicator in a uniform thickness, and drying the resulting coating film under heating at 130°C for 3 minutes, thereby obtaining an electrically debondable adhesive layer (adhesive layer) having a thickness of 30 μm. The adhesive sheet thus obtained is formed into a sheet having a size of 80 mm × 80 mm. A metal layer surface of a metal layer-attached film ("BR1075" (trade name), manufactured by Toray Film Co., Ltd., thickness: 25 μm, size: 100 mm × 100 mm) is adhered to a separator-free surface of the adhesive sheet, and the resulting laminate is stored in a thermostatic chamber having a temperature of 85°C and a humidity of 85% RH for 24 hours. The metal layer is scanned (white and black mode) using "Apeos Port IVC3370" manufacture by FUJI XEROX, the image obtained is binarized (color extraction setting: color cube Class 1, sensitivity 4) to extract an object having bright color, and the proportion of corrosion area is obtained by the following formula. Smaller proportion of corrosion area means that the metal layer is not corroded, that is, corrosion properties of the adhesive composition to a metal are low.

$$\text{Proportion (\%) of corrosion area} = [(\text{area of bright color object}) / (\text{area of bright color object} + \text{area of dark color object})] \times 100$$

According to the adhesive composition of the present invention, the proportion of corrosion area measured by the above method is preferably 50% or less, more preferably 30% or less, still more preferably 10% or less, and most preferably 0%.

The suitable proportion of corrosion area can be achieved by controlling components of the adhesive composition, and particularly can be achieved by controlling the kind and content of the additives.

(Initial adhesive force of electrically debondable composition, and adhesive force during applying voltage)

Adhesive force of the adhesive composition of the present invention can be evaluated by various methods, and can be measured by, for example, the following 180° peeling test.

Specifically, an adhesive sheet is obtained in the same manner as in the measurement method for the proportion of corrosion area. The adhesive sheet obtained is formed into a sheet having a size of 10 mm × 80 mm, and a metal layer face of a metal layer-attached film (trade name "BR1075" manufactured by Toray Advanced Film Co., Ltd., thickness:

25 μm, size: 100 mm × 100 mm) is adhered to a separator-free face of the adhesive sheet. A separator is peeled, a stainless steel plate (SUS304, size: 30 mm × 120 mm) as an adherend is adhered to the peeled face such that one extremity of the adhesive sheet is protruded from the adherend by approximately 2 mm, and is pressed by reciprocating a 2 kg roller one time. The resulting laminate is allowed to stand in the environment of 23°C for 30 minutes to obtain an adhered body including a stainless steel plate 6/an adhesive sheet 1'/a metal-attached film 5'. An overview of the adhered body is shown in FIG. 4. The adhesive sheet is peeled in an arrow method in FIG. 4 by a peeling tester (variation angle peeling tester "YSP" (trade name) manufactured by Asahi Seiko Co., Ltd.), and adhesive force in the 180° peeling test (tensile rate: 300 mm/min, peeling temperature: 23°C) is measured.

According to the adhesive composition of the present invention, adhesive force (initial adhesive force) measured by the above method in the state that a voltage is not applied is preferably 1.0 N/cm or more, more preferably 1.5 N/cm or more, further preferably 2.0 N/cm or more, particularly preferably 2.5 N/cm or more, and most preferably 3.0 N/cm or more. When the initial adhesive force is 1.0 N/cm or more, adhesion to an adherend is sufficient, and the adherend is difficult to debond or shift.

According to the adhesive composition of the present invention, adhesive force during applying a voltage, measured by the above method while applying a voltage of 10V after applying a voltage of 10V for 10 seconds (hereinafter simply referred to as "adhesive force during applying a voltage after applying 10V for 10 seconds) is smaller than the initial adhesive force. Although the preferred value of the adhesive force during applying a voltage after applying 10V for 10 seconds varies depending on the initial adhesive force, the value is, for example, preferably 2.5N /cm or less, more preferably 2.0 N/cm or less, still more preferably 1.5N/cm or less, and particularly preferably 1.0 N/cm or more.

According to the adhesive composition of the present invention, a ratio (B/A) of the adhesive force (B) during applying a voltage after applying 10V for 10 seconds, measured by the above method to the initial adhesive force (A) measured by the above method is preferably 0.5 or less, more preferably 0.3 or less, and still more preferably 0.1 or less. When the ratio is 0.5 or less, the adhesive force during applying a voltage after applying 10V for 10 seconds is sufficiently decreased as compared with the initial adhesive force, and electrical debonding can be easily performed. When the ratio is 0.1 or less, electrical debonding is particularly easily performed.

The adhesive force while applying a voltage after applying 10V for 10 seconds is described above, but the voltage to be applied and the application time are not particularly limited so long as the adhesive sheet can be debonded. Preferred ranges of those are described below.

The voltage to be applied is preferably 1V or more, more preferably 3V or more, and still more preferably 6V or more. On the other hand, the voltage is preferably 100V or less, more preferably 50V or less, still more preferably 30V or less, and particularly preferably 15V or less.

The application time is preferably 60 seconds or less, more preferably 40 seconds or less, still more preferably 20 seconds or less, and particularly preferably 10 seconds or less. In such a case, workability is excellent. Shorter application time is preferred, but the application time is generally 1 second or more.

The adhesive sheet provided with an electrically debondable adhesive layer composed of the adhesive composition of the present invention can sufficiently decrease the adhesive force even by the application of a voltage lower than before. Thus, debonding work is possible even in a simple device in which a dry cell or the like has been used a power source. In addition, the application time is shorter than before, and debonding workability is excellent.

(Manufacturing Method of Electrically Debondable Adhesive Composition)

Although not particularly limited, an electrically debondable adhesive composition of the present invention can be manufactured by appropriately stirring and mixing the polymer, the ionic liquid and the additives, and as needed, a crosslinking agent, polyethylene glycol, conductive filler and the like that are blended therewith.

[Adhesive Sheet]

An adhesive sheet of the present invention is not particularly limited so long as the adhesive sheet has at least one layer of an electrically debondable adhesive layer formed from an electrically debondable adhesive composition of the present invention. The adhesive sheet of the present invention may have an adhesive layer that does not contain the ionic liquid (hereinafter sometimes referred to as "other adhesive layer"), other than the electrically debondable adhesive layer. The adhesive sheet of the present invention may have a substrate, a conductive layer, a conduction substrate, an intermediate layer, an undercoat layer and the like, other than the above-mentioned layer. The adhesive sheet of the present invention may have, for example, a form in which the adhesive sheet is wound in a roll shape or a sheet-like form. The "adhesive sheet" also includes the meaning of an "adhesive tape". That is, the adhesive sheet of the present invention may be an adhesive tape having a tape-like form.

The adhesive sheet of the present invention may be a (substrateless) double-sided adhesive sheet including only the electrically debondable adhesive layer without having a substrate, that is, not containing a substrate layer. The

adhesive sheet of the present invention may be a double-sided sheet having a substrate, both surfaces of the substrate being the adhesive layer (electrically debondable layer or other adhesive layer). The adhesive sheet of the present invention may be a single-sided adhesive sheet having a substrate, only one surface of the substrate being an adhesive layer (electrically debondable adhesive layer or other adhesive layer). The adhesive sheet of the present invention may have a separator (release liner) for protecting the surface of the adhesive layer, but the separator is not included in the adhesive sheet of the present invention.

The structure of the adhesive sheet of the present invention is not particularly limited, but the adhesive sheet preferably includes an adhesive sheet X1 shown in FIG. 1, an adhesive sheet X2 showing a laminate structure in FIG. 2, and an adhesive sheet X3 showing a laminate structure in Fig. 3. The adhesive sheet X1 is a substrateless double-sided adhesive sheet including an electrically debondable adhesive layer 1 only. The adhesive sheet X2 is a substrate-attached double-sided adhesive sheet having a layer configuration of an adhesive layer 2, a conduction substrate 5 (substrate 3 and conductive layer 4), and an electrically debondable adhesive layer 1. The adhesive sheet X3 is a substrate-attached double-sided adhesive sheet having a layer configuration of an adhesive layer 2, a conduction substrate 5 (substrate 3 and conductive layer 4), an electrically debondable adhesive layer 1, another conduction substrate 5 (substrate 3 and conductive layer 4), and another adhesive layer 2. In the adhesive sheets X2 and X3 of FIGS. 2 and 3, the substrate 3 is not essential and only the conductive layer 4 may be present. The adhesive sheet X2 of FIG. 2 may be a single-sided adhesive sheet free of the adhesive layer 2.

The substrate 3 is not particularly limited, and includes a paper base substrate such as paper, a fiber base substrate such as cloth and nonwoven fabric, a plastic substrate such as a film or sheet made of various plastics (a polyolefin-based resin such as polyethylene and polypropylene, a polyester-based resin such as polyethylene terephthalate, an acrylic resin such as polymethyl methacrylate, and the like), and a laminate thereof. The substrate may have a form of a single layer and may have a form of multi-layers. The substrate may be subjected to, as needed, various treatments such as a back-face treatment, an antistatic treatment, and an undercoating treatment.

The conductive layer 4 is not particularly limited so long as it is a layer having conductivity, and may be a metal-based substrate such as metal (for example, aluminum, magnesium, copper, iron, tin, and gold) foil and a metal plate (for example, aluminum, magnesium, copper, iron, tin, and silver), a conductive polymer, and the like. The conductive layer may a metal-deposited film provided on the substrate 3.

The conduction substrate 5 is not particularly limited so long as it is a substrate having a conductive layer (carrying a current), and includes a substrate having a metal layer formed on a surface thereof. The substrate includes, for example, a substrate having a metal layer formed on a surface of the substrate exemplified above by a method such as a plating method, a chemical vapor deposition method or sputtering. The metal layer includes the metal, metal plate and conductive polymer exemplified above.

It is preferred in the adhesive sheet X1 that the adherend at the both sides thereof is an adherend having a metal adherend surface. It is preferred in the adhesive sheet X2 that an adherend at the side of the electrically debondable adhesive layer 1 is an adherend having a metal adherend surface.

The metal adherend surface includes a surface having conductivity and composed of a metal containing, for example, aluminum, copper, iron, magnesium, tin, gold, silver or lead as a main component. Above all, the surface composed of a metal containing aluminum is preferred. The adherend having a metal adherend surface includes, for example, a sheet, a component, a plate and the like that is composed of a metal containing, for example, aluminum, copper, iron, magnesium, tin, gold, silver or lead as a main component. Adherend other than the adherend having a metal adherend surface is not particularly limited, and includes a fiber sheet such as paper, cloth or nonwoven fabric, and a film or a sheet of various plastics.

The thickness of the electrically debondable adhesive layer 1 is preferably 1 $\mu$m or larger and 1,000 $\mu$m or smaller from the standpoint of adhesiveness when a voltage is not applied. The upper limit of the thickness is more preferably 500 $\mu$m, still more preferably 100 $\mu$m and particularly preferably 30 $\mu$m, and lower limit thereof is more preferably 3 $\mu$m, still more preferably 5 $\mu$m and particularly preferably 8 $\mu$m. In case where the adhesive sheet is a substrateless double-sided adhesive sheet including only the electrically debondable adhesive layer (adhesive sheet X1 shown in FIG. 1), the thickness of the electrically debondable adhesive layer is a thickness of the adhesive sheet.

The thickness of the adhesive layer 2 is preferably 1 $\mu$m or larger and 2,000 $\mu$m or smaller from the standpoint of adhesiveness. The upper limit of the thickness is more preferably 1,000 $\mu$m, still more preferably 500 $\mu$m and particularly preferably 100 $\mu$m, and the lower limit thereof is more preferably 3 $\mu$m, still more preferably 5 $\mu$m and particularly preferably 8 $\mu$m.

The thickness of the substrate 3 is preferably 10 $\mu$m or larger and 1,000 $\mu$m or smaller. The upper limit of the thickness is more preferably 500 $\mu$m, still more preferably 300 $\mu$m and particularly preferably 100 $\mu$m, and the lower limit thereof is more preferably 12 $\mu$m and still more preferably 25 $\mu$m.

The thickness of the conductive layer 4 is preferably 0.001 $\mu$m or larger and 1,000 $\mu$m or smaller. The upper limit of the thickness is more preferably 500 $\mu$m, still preferably 300 $\mu$m, still more preferably 50 $\mu$m and still further preferably 10 $\mu$m, and the lower limit thereof is more preferably 0.01 $\mu$m, still more preferably 0.03 $\mu$m and still further

preferably 0.05 μm.

The thickness of the conduction substrate 5 is preferably 10 μm or larger and 1,000 μm or smaller. The upper limit of the thickness is more preferably 500 μm, still more preferably 300 μm and particularly preferably 100 μm, and the lower limit thereof is more preferably 12 μm and still more preferably 25 μm.

The surface of the electrically debondable adhesive layer of the adhesive sheet of the present invention and other adhesive layer may be protected by a separator (release liner). The separator is not particularly limited, and includes a release liner in which the surface of a substrate (liner substrate) such as paper or plastic film has been silicone-treated, and a release liner in which the surface of a substrate (liner substrate) such as paper or plastic film has been laminated with a polyolefin-based resin. The thickness of the separator is not particularly limited, but is preferably 10 μm or larger and 100 μm or smaller.

The thickness of the adhesive sheet of the present invention is preferably 20 μm or larger and 3,000 μm or smaller. The upper limit of the thickness is more preferably 1,000 μm, still more preferably 300 μm and particularly preferably 200 μm, and the lower limit thereof is more preferably 30 μm and still more preferably 50 μm.

In particular, in case where the adhesive sheet is the adhesive sheet X2 shown in FIG. 2, the thickness of the adhesive sheet is preferably 50 μm or larger and 2,000 μm or smaller. The upper limit of the thickness is more preferably 1,000 μm and still more preferably 200 μm, and the lower limit thereof is more preferably 80 μm and still more preferably 100 μm.

In particular, in case where the adhesive sheet is the adhesive sheet X3 shown in FIG. 3, the thickness of the adhesive sheet is preferably 100 μm or larger and 3,000 μm or smaller. The upper limit of the thickness is more preferably 1,000 μm and still more preferably 300 μm, and the lower limit thereof is more preferably 150 μm and still more preferably 200 μm.

(Manufacturing Method of Adhesive Sheet)

As the manufacturing method of the adhesive layer of the adhesive sheet, a known or common manufacturing method can be used. For example, for the electrically debondable adhesive layer in the adhesive sheet of the present invention, a method in which a solution of the electrically debondable adhesive composition of the present invention which is dissolved in a solvent as needed is applied to the separator and dried and/or cured may be used. In addition, for other adhesive layer (second adhesive layer), a method in which a solution of the adhesive composition that does not contain the ionic liquid and the additive, dissolved in a solvent as needed is applied to the separator and dried and/or cured may be used. As the solvent and the separator, one described above can be used.

In performing application, a common coater (for example, a gravure roll coater, a reverse roll coater, a kiss roll coater, a dip roll coater, a bar coater, a knife coater, and a spray roll coater) can be used.

The electrically debondable adhesive layer and other adhesive layer can be manufactured by the method, and the adhesive sheet of the present invention can be manufactured by appropriately laminating the electrically debondable adhesive layer and other adhesive layer on the substrate, the conductive layer and the conduction substrate. The adhesive sheet may be manufactured by using the substrate, the conductive layer and the conduction substrate, in place of the separator and applying the adhesive composition.

(Electrically Debonding Method of Adhesive Sheet)

Debonding of the adhesive sheet of the present invention from an adherend can be performed by generating a potential difference in a thickness direction of the electrically debondable adhesive layer by applying a voltage to the electrically debondable adhesive layer. For example, in case where the adhesive sheet X1 is an adherent having both metal adherend surfaces, debonding can be performed by that a current is carried to both metal adherend surfaces and a voltage is applied to the electrically debondable adhesive layer. In case where the adhesive sheet X2 is an adherend having a metal adherend surface at the electrically debondable adhesive layer side, debonding can be performed by that a current is carried to the conductive adherend and the conductive layer 4 and a voltage is applied to the electrically debondable adhesive layer. In the case of the adhesive sheet X3, debonding can be performed by that a current is carried to the conductive layers 4 on both surfaces and a voltage is applied to the electrically debondable adhesive layer. The current-carrying is preferably performed by connecting terminals to one end and the other end of the adhesive sheet such that a voltage is applied to the entire electrically debondable adhesive layer. The one end and the other end may be a part of the adherend having a metal adherend surface when the adherend is a metal adherend surface. When the adhesive sheet is debonded from the adherend, a voltage may be applied after adding water to the interface between the metal adherend surface and the electrically debondable adhesive layer.

(Uses of adhesive sheet)

The conventional debonding technology includes an adhesive layer that is cured by ultraviolet (UV) irradiation and deboned, and an adhesive layer that is debonded by heat. The adhesive sheet using such an adhesive layer cannot be used in case where ultraviolet (UV) irradiation is difficult or damages are generated in a member by heat. Because the adhesive sheet of the present invention having the electrically debondable adhesive layer does not use ultraviolet rays and heat, debonding can be easily performed by applying a voltage without damaging a member that is an adherend. Therefore, the adhesive sheet of the present invention is suitable for use in fixation of a secondary battery (for example, lithium ion battery pack) used in a mobile terminal such as a smart phone, mobile phone, a notebook computer, a video camera or a digital camera to a case.

Rigid member to be adhered by the adhesive sheet of the present invention includes, for example, a silicon substrate, a sapphire substrate for LED, an SiC substrate and a metal base substrate for use in a semiconductor wafer; a TFT substrate and a color substrate for a display; and a base substrate for an organic EL panel. Brittle member to be adhered by a double-sided adhesive sheet includes, for example, a semiconductor substrate such as a compound semiconductor substrate; a silicon substrate for use in MEMS device, a passive matrix substrate, a surface cover glass for a smart phone, OGS (One Glass Solution) substrate including the cover glass having provided thereon a touch panel sensor, an organic substrate and an organic/inorganic hybrid substrate including silsesquioxane; a flexible glass substrate for a flexible display, and a graphene sheet.

[Adhered Body]

An adhered body of the present invention has a laminate structure part including an adherend having a metal adherend surface, and an adhesive sheet having an electrically debondable adhesive layer bonded to the metal adherend surface. The adherend having a metal adherend surface includes, for example, metals including aluminum, copper, iron, magnesium, tin, silver, lead and the like as a main component. Above all, a metal containing aluminum is preferred.

The adhered body of the present invention includes, for example, an adhered body of the adhesive sheet X1, and adherends having a metal adherend surface provided on both surfaces of the electrically debondable adhesive layer 1; an adhered body of the adhesive sheet X2, an adherend having a metal adherend surface provided on the electrically debondable adhesive layer 1 side, and the adherend provided on the adhesive layer 2 side; and an adhered body of the adhesive sheet X3 and adherends provided on both surfaces of the adhesive layer 2.

Examples

The present invention will be more specifically described below by Examples, but the present invention is not limited by these Examples. Weight average molecular weight described below is measured using a gel permeation chromatograph (GPC) method by the above-described method. In addition, a glass transition temperature (Tg) described below is a temperature calculated by the above-described Fox formula.

(Preparation of Acrylic Polymer 1 Solution)

95 Parts by mass of n-butyl acrylate (BA) and 5 parts by mass of acrylic acid (AA) as monomer components and 150 parts by mass of ethyl acetate as a polymerization solvent were put into a separable flask and stirred for 1 hour while introducing nitrogen gas. In this manner, oxygen in the polymerization system was removed, and then 0.2 parts by mass of 2,2'-azobisisobutyronitrile (AIBN) as a polymerization initiator was added. A temperature was raised to 63°C and a reaction was performed for 6 hours. Thereafter, ethyl acetate was added to obtain an acrylic polymer 1 solution having a solid content concentration of 40% by mass. The weight average molecular weight of the acrylic polymer in the acrylic polymer 1 solution was 500,000, the glass transition temperature (Tg) when the acrylic polymer 1 was cured was -50°C, and the solubility parameter (SP value) was 9.9.

(Preparation of Acrylic Polymer 2 Solution)

100 Parts by mass of n-butyl acrylate (BA) as a monomer component and 150 parts by mass of ethyl acetate as a polymerization solvent were put into a separable flask and stirred for 1 hour while introducing nitrogen gas. In this manner, oxygen in the polymerization system was removed, and then 0.2 parts by mass of 2,2'-azobisisobutyronitrile (AIBN) as a polymerization initiator was added. A temperature was raised to 63°C and a reaction was then performed for 6 hours. Thereafter, ethyl acetate was added to obtain an acrylic polymer 2 solution having a solid content concentration of 40% by mass. The weight average molecular weight of the acrylic polymer 2 in the acrylic polymer 1 solution was 500,000, the glass transition temperature (Tg) when the acrylic polymer was cured was -54°C, and the solubility parameter

(SP value) was 9.8.

(Preparation of Acrylic Polymer 3 Solution)

65 Parts by mass of 2-ethyl hexyl acrylate (2EHA), 30 parts by mass of 2-methoxyethyl acrylate (MEA) and 5 parts by mass of acrylic acid (AA) as monomer components and 150 parts by mass of ethyl acetate as a polymerization solvent were put into a separable flask and stirred for 1 hour while introducing nitrogen gas. In this manner, oxygen in the polymerization system was removed, and then 0.2 parts by mass of 2,2'-azobisisobutyronitrile (AIBN) as a polymerization initiator was added. A temperature was raised to 63°C and a reaction was performed for 6 hours. Thereafter, ethyl acetate was added to obtain an acrylic polymer 3 solution having a solid content concentration of 40% by mass. The solubility parameter (SP value) of the acrylic polymer 3 was 9.5.

(Preparation of Acrylic Polymer 4 Solution)

90 Parts by mass of n-butyl acrylate (BA) and 10 parts by mass of acrylic acid (AA) as monomer components, and 150 parts by mass of ethyl acetate as a polymerization solvent were put into a separable flask and stirred for 1 hour while introducing nitrogen gas. In this manner, oxygen in the polymerization system was removed, and then 0.2 parts by mass of 2,2'-azobisisobutyronitrile (AIBN) as a polymerization initiator was added. A temperature was raised to 63°C and a reaction was performed for 6 hours. Thereafter, ethyl acetate was added to obtain an acrylic polymer 4 solution having a solid content concentration of 40% by mass. The solubility parameter (SP value) of the acrylic polymer 4 was 10.1.

(Preparation of Acrylic Polymer 5 Solution)

90 Parts by mass of 2-ethyl hexyl acrylate (2EHA) and 10 parts by mass of acrylic acid (AA) as monomer components, and 150 parts by mass of ethyl acetate as a polymerization solvent were put into a separable flask and stirred for 1 hour while introducing nitrogen gas. In this manner, oxygen in the polymerization system was removed, and then 0.2 parts by mass of 2,2'-azobisisobutyronitrile (AIBN) as a polymerization initiator was added. A temperature was raised to 63°C and a reaction was performed for 6 hours. Thereafter, ethyl acetate was added to obtain an acrylic polymer 5 solution having a solid content concentration of 40% by mass. The solubility parameter (SP value) of the acrylic polymer 5 was 9.3.

[Examples 1 to 49 and Comparative Examples 1 to 4]

An acrylic polymer (solution) obtained above, a crosslinking agent, a ionic liquid, and additives (carbodiimide compound, adsorptive inhibitor and chelate-forming metal deactivator) were added in the proportions shown in the following Tables 1 to 11, stirred and mixed to obtain each electrically debondable adhesive composition (solution). The value of each component in Tables 1 to 11 below means "parts by mass".

The electrically debondable adhesive composition (solution) obtained was applied to a release-treated surface of a polyethylene terephthalate separator (trade name "MRF 38", manufactured by Mitsubishi Plastics) having the release-treated surface so as to have a uniform thickness of 30 $\mu$m using an applicator. Next, drying by heating was performed at 130°C for 3 minutes, and an electrically debondable adhesive layer (adhesive sheet) having a thickness of 30 $\mu$m was obtained. Each electrically debondable adhesive layer (adhesive sheet) was evaluated as follows.

[Evaluation]

(Corrosive Properties)

Electrically debondable adhesive layer (adhesive sheet) was formed into a size of 80 mm $\times$ 80 mm. A metal layer face of a metal layer-attached film (trade name "BR1075", manufactured by Toray Advanced Film Co., Ltd., thickness of 25 $\mu$m, and a size of 100 mm $\times$ 100 mm) was adhered to a separator-free face of the adhesive sheet, and the resulting laminate was stored in a thermostatic chamber having a temperature of 85°C and a humidity of 85% RH for 24 hours. The proportion of corrosion area was visually judged and corrosive properties were evaluated by the following criteria. In Examples 33 to 49, a metal layer was scanned (white and black mode) using "Apeos Port IVC3370" manufactured by FUJI XEROX, the image obtained was binarized (color extraction setting: color cube Class 1, sensitivity 4) using "Image-Pro Plus" manufactured by Media Cybernetics to extract an object having bright color, and the proportion of corrosion area was obtained by the following formula. Corrosive properties were evaluated by the following criteria depending on the value of the proportion of corrosion area obtained. The separator and electrically debondable adhesive layer are transparent and do not disturb the observation of a metal layer. Therefore, visual confirmation and scanning

were conducted in the adhered state of those.

$$\text{Proportion (\%) of corrosion area} = [(\text{area of bright color object}) / (\text{area of bright color object} + \text{area of dark color object})] \times 100$$

<Evaluation Standard>

○: Proportion of corrosion area is 0% (corrosion was not observed)
Δ: Proportion of corrosion area is more than 0% and 10% or less (corrosion was partially observed)
×: Proportion of corrosion area is more than 10% (corrosion was observed)

(Initial Adhesive Force)

The electrically debondable adhesive layer (adhesive sheet) was formed into a sheet having a size of 10 mm × 80 mm, and a metal layer face of a metal layer-attached film (trade name "BR 1075" manufactured by Toray Advanced Film Co., Ltd., thickness of 25 μm, and a size of 10 mm × 100 mm) as a substrate was adhered to a separator-free face of the sheet to obtain a substrate-attached single-sided adhesive sheet. A separator of the substrate-attached single-sided adhesive sheet was peeled off, and a stainless steel plate (SUS304, size: 30 mm × 120 mm) as an adherend was adhered to the peeled face such that one extremity of the adhesive sheet was protruded from the adherend by approximately 2 mm, and was pressed by reciprocating a 2 kg roller one time. After allowing to stand in the environment of 23°C for 30 minutes, an adhered body including stainless steel plate 6/electrically debondable adhesive layer (adhesive sheet) 1'/metal layer-attached film (conduction substrate) 5' was obtained. The outline of the adhered body is shown in FIG. 4. Thereafter, The adhesive sheet was peeled in an arrow method in FIG. 4 by a peeling tester (variation angle peeling tester "YSP" (trade name) manufactured by Asahi Seiko Co., Ltd.), and adhesive force in 180° peeling test (tensile rate: 300 mm/min, peeling temperature: 23°C) was measured. The measurement results are shown in Tables 1 to 11.

(Adhesive Force during Application of Voltage)

Similar to the above-described initial adhesive force, an adhered body including stainless steel plate 6/electrically debondable adhesive layer (adhesive sheet) 1'/metal layer-attached film (conduction substrate) 5' outlined in FIG. 4 was obtained. Electrodes of a negative pole and a positive pole of a DC power supply device were attached to α and β positions in FIG. 4 of the adhered body, respectively, and a voltage (10V) was applied for 10 seconds. Thereafter, while immediately applying a voltage, similar to the above-described initial adhesive force, the adhesive sheet was peeled in an arrow method in FIG. 4 by a peeling tester, and adhesive force in 180° peeling test was measured. The measurement results are shown in Tables 1 to 6 and 8 to 11. In Example 29 to 32, the voltage applied was 30V, and adhesive force was measured. The measurement results are shown in Table 7.

Furthermore, a ratio (B/A) of adhesive force (B) during application of a voltage to the initial adhesive force (A) measured by the above method is shown in Tables 1 to 11.

(Decrease of Gel Fraction)

The electrically debondable adhesive layers (adhesive sheets) obtained in Examples 29 to 32 were stored for 10 days in the environment of a temperature of 85°C and a humidity of 85%RH, and a gel fraction after storage obtained by the measurement method described below was indicated as a "gel fraction after storing in thermostatic chamber". Furthermore, a gel fraction before storing obtained by the measurement method described below was indicated as an "initial gel fraction".

The decrease of gel fraction was calculated by the following formula. The decrease of gel fraction of 80% or less was indicated as ×, the decrease of gel faction of more than 80% and less than 100 was indicated as Δ, and the decrease of gel fraction of 100% or more was indicated as O. Whether or not the decrease of gel fraction could be suppressed in each electrically debondable adhesive layer was evaluated. The evaluation results are shown in Table 7.

$$\text{Decrease (\%) of gel fraction} = [(\text{gel fraction after storing in thermostatic chamber}) / (\text{initial gel fraction})\ ] \times 100$$

Measurement method of gel fraction

About 1 g of an electrically debondable adhesive layer was collected, its weight was measured, and the weight was indicated as a "weight of adhesive layer before dipping". The electrically debondable adhesive layer collected was dipped in 40 g of ethyl acetate for 7 days, all of components insoluble in ethyl acetate (insoluble portion) was recovered, and all of the insoluble portions recovered was dried at 130°C for 2 hours to remove ethyl acetate. The weight was measured and indicated as a "dry weight of insoluble portion" (weight of adhesive layer after dipping). The numerical value obtained was assigned to the following formula, and a gel fraction was obtained.

$$\text{Gel fraction (\% by weight)} = [(\text{dry weight of insoluble portion}) / (\text{weight of adhesive layer before dipping})] \times 100$$

Table 1

| | | | Ex. 1 | Ex. 2 | Ex. 3 | Ex. 4 |
|---|---|---|---|---|---|---|
| Polymer | Acrylic polymer 1 (solid content) | | 100 | 100 | 100 | 100 |
| Crosslinking agent | TETRAD C | | 0.01 | 0.01 | 0.01 | 0.01 |
| Ionic liquid | AS-110 | | 5 | 5 | 5 | 5 |
| Additive | Carbodiimide | V-05 | 0.5 | 1 | 2 | 3 |
| Corrosive properties | Proportion (%) of corrosion area | | More than 0% and 10% or less | 0 | 0 | 0 |
| | Evaluation | | Δ | ○ | ○ | ○ |
| Adhesive properties | (A): Initial adhesive force (N/cm) | | 5.2 | 4.86 | 4.89 | 4.23 |
| | (B): Debonding force during applying voltage (N/cm) | | 0.17 | 0.21 | 0.38 | 0.37 |
| | B/A | | 0.03 | 0.04 | 0.08 | 0.09 |

Table 2

| | | | Ex. 5 | Ex. 6 | Ex. 7 | Ex. 8 | Ex. 9 | Ex. 10 | Ex. 11 |
|---|---|---|---|---|---|---|---|---|---|
| Polymer | Acrylic polymer 1 (solid content) | | 100 | 100 | 100 | 100 | 100 | 100 | 100 |
| Crosslinking agent | TETRAD C | | 0.08 | 0.08 | 0.08 | 0.08 | 0.08 | 0.08 | 0.08 |
| Ionic liquid | AS-110 | | 5 | 5 | 5 | 5 | 5 | 5 | 5 |
| Additive | Adsorptive inhibitor | TEA | - | - | - | - | 1 | 5 | - |
| | | TBA | - | - | - | - | - | - | 5 |
| | | TMDPA | 0.25 | 0.5 | 5 | 10 | - | - | - |
| Corrosive properties | Proportion (%) of corrosion area | | 0 | 0 | 0 | 0 | 0 | 0 | 0 |
| | Evaluation | | ○ | ○ | ○ | ○ | ○ | ○ | ○ |
| Adhesive properties | (A): Initial adhesive force (N/cm) | | 4.05 | 3.86 | 4.2 | 4.03 | 4.34 | 4.4 | 3.81 |
| | (B): Debonding force during applying voltage (N/cm) | | 0.16 | 0.16 | 0.3 | 0.16 | 0.19 | 0.14 | 0.19 |
| | B/A | | 0.04 | 0.04 | 0.07 | 0.04 | 0.04 | 0.03 | 0.05 |

Table 3

| | | | Ex. 12 | E. 13 | Ex. 14 | Ex. 15 | Ex. 16 |
|---|---|---|---|---|---|---|---|
| Polymer | Acrylic polymer 1 (solid content) | | 100 | 100 | 100 | 100 | 100 |
| Crosslinking agent | TETRAD C | | 0.08 | 0.08 | 0.08 | 0.08 | 0.08 |
| Ionic liquid | AS-110 | | 5 | 5 | 5 | 5 | 5 |
| Additive | Chelate-forming metal deactivator | Irgamet 30 | 0.1 | 1 | 5 | 10 | - |
| | | Irgamet 42 | - | - | - | - | 1 |
| Corrosive properties | Proportion (%) of corrosion area | | More than 0% and 10% or less | 0 | 0 | 0 | 0 |
| | Evaluation | | Δ | ○ | ○ | ○ | ○ |
| Adhesive properties | (A): Initial adhesive force (N/cm) | | 3.89 | 4.03 | 4.35 | 3.99 | 4.43 |
| | (B): Debonding force during applying voltage (N/cm) | | 0.17 | 0.37 | 0.18 | 0.45 | 1.52 |
| | B/A | | 0.04 | 0.09 | 0.04 | 0.11 | 0.34 |

Table 4

| | | | Ex. 17 | Ex. 18 | Ex. 19 | Ex. 20 |
|---|---|---|---|---|---|---|
| Polymer | Acrylic polymer 1 (solid content) | | 100 | 100 | 100 | 100 |
| Crosslinking agent | TETRAD C | | - | 0.05 | 0.05 | 0.05 |
| Ionic liquid | AS-110 | | 5 | 5 | 5 | 5 |
| Additive | Carbodiimide | V-05 | 1.5 | - | - | - |
| | Adsorptive inhibitor | FARMIN DM0898 | - | 1 | - | - |
| | | FARMIN DM2098 | - | - | 1 | - |
| | | FARMIN DM8098 | - | - | - | 1 |
| | Chelate-forming metal deactivator | Irgamet 30 | 0.75 | 0.75 | 0.75 | 0.75 |
| Corrosive properties | Proportion (%) of corrosion area | | 0 | 0 | 0 | 0 |
| | Evaluation | | ○ | ○ | ○ | ○ |
| Adhesive properties | (A): Initial adhesive force (N/cm) | | 4.2 | 1.52 | 3.9 | 3.89 |
| | (B): Debonding force during applying voltage (N/cm) | | 0.18 | 0.16 | 0.14 | 0.17 |
| | B/A | | 0.04 | 0.11 | 0.04 | 0.04 |

Table 5

| | | Ex. 21 | Ex. 22 | Ex. 23 |
|---|---|---|---|---|
| Polymer | Acrylic polymer 1 (solid content) | - | 100 | 100 |
| | Acrylic polymer 2 (solid content) | 100 | - | - |
| Crosslinking agent | TETRAD C | - | 0.05 | 0.05 |

(continued)

| | | | Ex. 21 | Ex. 22 | Ex. 23 |
|---|---|---|---|---|---|
| Ionic liquid | AS-110 | | 5 | - | - |
| | 1-Butyl-1-methylpyridium bis(trifluoromethanesulfonyl)imide | | - | 5 | - |
| | CIL-313 | | - | - | 5 |
| Additive | Carbodiimide | V-05 | 1 | 1 | 1 |
| | Chelate-forming metal deactivator | Irgamet 30 | 1 | 1 | 1 |
| Corrosive properties | Proportion (%) of corrosion area | | 0 | 0 | 0 |
| | Evaluation | | ○ | ○ | ○ |
| Adhesive properties | (A): Initial adhesive force (N/cm) | | 1.32 | 4.9 | 4.36 |
| | (B): Debonding force during applying voltage (N/cm) | | 0.4 | 2 | 0.87 |
| | B/A | | 0.30 | 0.41 | 0.20 |

Table 6

| | | | Ex. 24 | Ex. 25 | Ex. 26 | Ex. 27 | Ex. 28 |
|---|---|---|---|---|---|---|---|
| Polymer | Acrylic polymer 1 (solid content) | | 100 | 100 | 100 | 100 | 100 |
| Crosslinking agent | TETRAD C | | - | - | - | 0.05 | 0.05 |
| Ionic liquid | AS-110 | | 5 | 5 | 5 | 5 | 5 |
| Additive | Adsorptive inhibitor | FARMIN 08D | 1 | 5 | - | - | - |
| | | FARMIN 20D | - | - | 1 | - | - |
| | | CORROMIN W | - | - | - | 0.3 | 2 |
| Corrosive properties | Proportion (%) of corrosion area | | More than 0% and 10% or less | 0 | More than 0% and 10% or less | More than 0% and 10% or less | More than 0% and 10% or less |
| | Evaluation | | Δ | ○ | Δ | Δ | Δ |
| Adhesive properties | (A): Initial adhesive force (N/cm) | | 4.54 | 4.34 | 4.2 | 4.01 | 3.79 |
| | (B): Debonding force during applying voltage (N/cm) | | 0.17 | 0.15 | 0.16 | 0.16 | 0.16 |
| | B/A | | 0.04 | 0.03 | 0.04 | 0.04 | 0.04 |

Table 7

| | | Ex. 29 | Ex. 30 | Ex. 31 | Ex. 32 |
|---|---|---|---|---|---|
| Polymer | Acrylic polymer 1 (solid content) | 100 | 100 | 100 | 100 |
| Crosslinking agent | CORONATE L | 0.25 | 0.5 | 0.75 | 1 |
| Ionic liquid | AS-110 | 5 | 5 | 5 | 5 |

(continued)

| | | | Ex. 29 | Ex. 30 | Ex. 31 | Ex. 32 |
|---|---|---|---|---|---|---|
| Additive | Carbodiimide | V-05 | 1 | 1 | 1 | 1 |
| | Chelate-forming metal deactivator | Irgamet 30 | 2 | 2 | 2 | 2 |
| Corrosive properties | Proportion (%) of corrosion area | | 0 | 0 | 0 | 0 |
| | Evaluation | | ○ | ○ | ○ | ○ |
| Adhesive properties | (A): Initial adhesive force (N/cm) | | 4.34 | 4.12 | 4.52 | 5.18 |
| | (B): Debonding force during applying voltage (N/cm) | | 0.3 | 0.49 | 0.21 | 0.37 |
| | B/A | | 0.07 | 0.12 | 0.05 | 0.07 |
| Gel fraction | Decrease of gel fraction | | Δ | ○ | ○ | ○ |

Table 8

| | | | Ex. 33 | Ex. 34 | Ex. 35 | Ex. 36 | Ex. 37 | Ex. 38 | Ex. 39 |
|---|---|---|---|---|---|---|---|---|---|
| Polymer | Acrylic polymer 1 (solid content) | | 100 | 100 | 100 | 100 | 100 | 100 | 100 |
| Ionic liquid | AS-110 | | 5 | 5 | 5 | 5 | 5 | 5 | 5 |
| Additive | Carbodiimide | V-05 | 1 | 1 | 1 | 1 | 1 | 1 | 1 |
| | Absorptive inhibitor | M415 | - | - | 0.3 | 1 | - | - | - |
| | | M138 | - | - | - | - | 0.3 | 0.1 | 0.7 |
| | Chelate-forming metal deactivator | M238 | 0.3 | 1 | - | - | - | - | - |
| Corrosive properties | Proportion (%) of corrosion area | | 1.5 | 0.5 | 1.8 | 0.4 | 0 | 0 | 0 |
| | Evaluation | | Δ | Δ | Δ | Δ | ○ | ○ | ○ |
| Adhesive properties | (A): Initial adhesive force (N/cm) | | 4.05 | 4.2 | 4.02 | 3.85 | 4.26 | 4.08 | 3.98 |
| | (B): Debonding force during applying voltage (N/cm) | | 0.41 | 1.29 | 0.14 | 0.51 | 0.15 | 0.13 | 0.23 |
| | B/A | | 0.10 | 0.31 | 0.03 | 0.13 | 0.04 | 0.03 | 0.06 |

Table 9

| | | Ex. 40 | Ex. 41 | Ex. 42 | Ex. 43 | Ex. 44 | Ex. 45 | Ex. 46 |
|---|---|---|---|---|---|---|---|---|
| Polymer | Acrylic polymer 1 (solid content) | 100 | 100 | 100 | 100 | 100 | 100 | 100 |
| Crosslinking agent | TETRAD C | - | - | - | - | - | - | 0.1 |
| Ionic liquid | AS-110 | 5 | 5 | 5 | 5 | 5 | 5 | 5 |

(continued)

| | | | Ex. 40 | Ex. 41 | Ex. 42 | Ex. 43 | Ex. 44 | Ex. 45 | Ex. 46 |
|---|---|---|---|---|---|---|---|---|---|
| Additive | Carbodiimide | V-05 | 1 | 1 | 1 | 1 | 1 | 1 | - |
| | Adsorptive inhibitor | M138 | - | - | - | - | - | - | 0.3 |
| | | Irgacor DSSG | 0.3 | 0.3 | 0.3 | 0.3 | 0.3 | - | - |
| | | Amin O | - | 0.5 | 1 | 2 | 4 | - | - |
| | | Irgacor L12 | - | - | - | - | - | 1 | - |
| | Chelate-forming metal deactivator | Irgamet 30 | 0.8 | 0.8 | 0.8 | 0.8 | 0.8 | 2 | - |
| Corrosive properties | Proportion (%) of corrosion area | | 0 | 0 | 0 | 0 | 0 | 0 | 0 |
| | Evaluation | | ○ | ○ | ○ | ○ | ○ | ○ | ○ |
| Adhesive properties | (A): Initial adhesive force (N/cm) | | 4.22 | 4.21 | 4.22 | 4.05 | 3.98 | 2.8 | 3.95 |
| | (B): Debonding force during applying voltage (N/cm) | | 0.14 | 0.14 | 0.15 | 0.13 | 0.14 | 0.22 | 0.14 |
| | B/A | | 0.03 | 0.03 | 0.04 | 0.03 | 0.04 | 0.08 | 0.04 |

Table 10

| | | Com. Ex. 1 | Com. Ex. 2 | Com. Ex. 3 | Com. Ex. 4 |
|---|---|---|---|---|---|
| Polymer | Acrylic polymer 1 (solid content) | 100 | 100 | 100 | - |
| | Acrylic polymer 2 (solid content) | - | - | - | 100 |
| Crosslinking agent | TETRAD C | 0.08 | 0.08 | 0.08 | - |
| Ionic liquid | AS-110 | 5 | - | - | 5 |
| | 1-Butyl-1-methylpyridium bis (trifluoromethanesulfonyl)imide | - | 5 | - | - |
| | CIL-313 | - | - | 5 | - |
| Corrosive properties | Proportion (%) of corrosion area | More than 10% | More than 10% | More than 10% | More than 10% |
| | Evaluation | × | × | × | × |
| Adhesive properties | (A): Initial adhesive force (N/cm) | 4.24 | 4.23 | 4.01 | 1.45 |
| | (B): Debonding force during applying voltage (N/cm) | 0.14 | 1.7 | 0.82 | 1.5 |
| | B/A | 0.03 | 0.40 | 0.20 | 1.00 |

Table 11

| | | Ex. 47 | Ex. 48 | Ex. 49 |
|---|---|---|---|---|
| Polymer | Acrylic polymer 3 (solid content) | 100 | - | - |
| | Acrylic polymer 4 (solid content) | - | 100 | - |
| | Acrylic polymer 5 (solid content) | - | - | 100 |
| Crosslinking agent | TETRAD C | 0.1 | 0.2 | 0.1 |
| Ionic liquid | AS-110 | 5 | 5 | 5 |
| Additive | Adsorptive inhibitor M138 | 0.3 | 1 | 0.3 |
| Corrosive properties | Proportion (%) of corrosion area | 0 | 0 | 0 |
| | Evaluation | ○ | ○ | ○ |
| Adhesive properties | (A): Initial adhesive force (N/cm) | 6.06 | 4.39 | 5.45 |
| | (B): Debonding force during applying voltage (N/cm) | 0.14 | 0.51 | 3.61 |
| | B/A | 0.02 | 0.12 | 0.66 |

Abbreviations of the crosslinking agents, ionic liquids and additives in Tables 1 to 11 above are as follows.

(Crosslinking agent)

TETRAD C: 1,3-Bis(N,N'-diglycidylaminomethyl)cyclohexane, trade name "TETRAD-C", manufactured by Mitsubishi Gas Chemical Company, Inc.
CORONATE L: Isocyanate compound, trade name "CORONATE L", manufactured by Tosoh Corporation

(Ionic liquid)

AS-110: Cation: 1-ethyl-3-methylimidazolium cation, anion: bis(fluorosulfonyl)-imide anion, trade name "ELEXCEL AS-110", manufactured by DKS Co., Ltd.
CIL-313: Cation: 1-butyl-3-methylpyridium, anion: trifluoromethane sulfate, trade name "CIL-313", manufactured by Japan Carlit Co., Ltd.

(Additive: carbodiimide compound)

V05: Polycarbodiimide resin, trade name "CARBODILITE V-05", manufactured by Nisshinbo Chemical Inc.

(Additive: adsorptive inhibitor)

TEA: Triethylamine, manufactured by Wako Pure Chemical Industries, Ltd.
TBA: Tributylamine, manufactured by Wako Pure Chemical Industries, Ltd.
TMDPA: N,N,N',N'-tetramethyl-2,2-dimethyl-1,3-propanediamine (manufactured by Tokyo Chemical Industry Co., Ltd.)
FARMIN DM0898: Dimethyloctylamine, trade name "FARMIN DM0898", manufactured by Kao Corporation
FARMIN DM2098: Dimethyllaurylamine, trade name "FARMIN DM2098", manufactured by Kao Corporation
FARMIN DM8098: Dimethylstearylamine, trade name "FARMIN DM8098", manufactured by Kao Corporation
FARMIN 08D: Octylamine, trade name "FARMIN 08D", manufactured by Kao Corporation
FARMIN 20D: Laurylamine, trade name "FARMIN 20D", manufactured by Kao Corporation
CORROMIN W: Alkyl phosphoric acid salt compound, trade name "CORROMIN W", manufactured by Kao Corporation
M415: Dicyclohexylamine, trade "M415", manufactured by CORTEC
M138: Disodium sebacate, trade name "M138", manufactured by CORTEC
Irgacor DSSG: Disodium sebacate, trade name "Irgamet DSSG", manufactured by BASF
Amin O: Imidazoline derivative, trade name "Amin O", manufactured by BASF
Irgacor L12: Succinic acid derivative half ester, trade name "Irgacor L12", manufactured by BASF

(Additive: chelate-forming metal deactivator)

Irgamet 30: N,N-bis(2-ethylhexy)-1,2,4-triazol-1-yl methane amine, trade name "Irgamet 30", manufactured by BASF
Irgamet 42: Benzotriazole derivative, trade name "Irgamet 42", manufactured by BASF
M238: Benzotriazole, trade name "M238", manufactured by CORTEC

Although the present invention has been described in detail and by reference to the specific embodiments, it is apparent to one skilled in the art that various modifications or changes can be made without departing the spirit and scope of the present invention. This application is based on Japanese Patent Application No. 2017-040236 filed May 3, 2017 and Japanese Patent Application No. 2017-195729 filed October 6, 2017, the disclosures of which are incorporated herein by reference in their entities.

REFERENCE SIGNS LIST

X1, X2, X3: Adhesive sheets
1: Electrically debondable adhesive layer
2: Adhesive layer
3: Substrate
4: Conductive layer
5: Conduction substrate

## Claims

1. An electrically debondable adhesive composition comprising
a polymer,
an ionic liquid, and
at least one additive selected from the group consisting of a carbodiimide compound, an adsorptive inhibitor and a chelate-forming metal deactivator.

2. The electrically debondable adhesive composition according to claim 1, wherein the carbodiimide compound is contained in an amount of 0.01 parts by mass or more and 10 parts by mass or less, per 100 parts by mass of the polymer.

3. The electrically debondable adhesive composition according to claim 1 or 2, wherein the adsorptive inhibitor contains an alkylamine, and the content of the alkylamine is 0.01 parts by mass or more and 20 parts by mass or less, per 100 parts by mass of the polymer.

4. The electrically debondable adhesive composition according to any one of claims 1 to 3, wherein the adsorptive inhibitor contains a carboxylic acid salt or a carboxylic acid derivative, and the total content of the carboxylic acid salt and the carboxylic acid derivative is 0.01 parts by mass or more and 10 parts by mass or less, per 100 parts by mass of the polymer.

5. The electrically debondable adhesive composition according to any one of claims 1 to 4, wherein the adsorptive inhibitor contains an alkyl phosphoric acid salt, and the content of the alkyl phosphoric acid salt is 0.01 parts by mass or more and 10 parts by mass or less, per 100 parts by mass of the polymer.

6. The electrically debondable adhesive composition according to any one of claims 1 to 5, wherein the chelate-forming metal deactivator is contained in an amount of 0.01 parts by mass or more and 20 parts by mass or less, per 100 parts by mass of the polymer.

7. The electrically debondable adhesive composition according to any one of claims 1 to 6, wherein the content of the additive is 0.01 parts by mass or more and 30 parts by mass or less, per 100 parts by mass of the polymer.

8. The electricallydebondable adhesive composition according to any one of claims 1 to 7, wherein the chelate-forming metal deactivator is a triazole group-containing compound or a benzotriazole group-containing compound.

**9.** An electrically debondable adhesive composition comprising a polymer and an ionic liquid, wherein the proportion of corrosion area of an aluminum-deposited film after adhering an electricallydebondable adhesive layer formed by the electrically debondable adhesive composition to the aluminum-deposited film, followed by storing in a thermostatic chamber having a temperature of 85°C and a humidity of 85% RH for 24 hours is 10% or less.

**10.** The electrically debondable adhesive composition according to any one of claims 1 to 9, wherein a ratio (B/A) of an adhesive force (B) measured while applying a voltage of 10V after applying a voltage of 10V for 10 seconds to an initial adhesive force (A), of an electrically debondable adhesive layer formed by the electrically debondable adhesive composition is 0.5 or less.

**11.** The electrically debondable adhesive composition according to any one of claims 1 to 10, wherein the content of a compound having a hydrocarbon-based aromatic skeleton is 0.9% by weight or less.

**12.** The electrically debondable adhesive composition according to any one of claims 1 to 10, wherein the content of a compound having a benzotriazole skeleton is 0.9% by weight or less.

**13.** The electrically debondable adhesive composition according to any one of claims 1 to 12, wherein a solubility parameter of the polymer is 9.4 or more and 11.0 or less.

**14.** The electrically debondable adhesive composition according to any one of claims 1 to 13, wherein the polymer is an acrylic polymer, and the proportion of acrylic acid to total monomer components (100% by mass) constituting the acrylic polymer is 0.1% by mass or more and 15% by mass or less.

**15.** The electrically debondable adhesive composition according to any one of claims 1 to 14, wherein an anion of the ionic liquid is an anion of a sulfonylimide-based compound.

**16.** The electrically debondable adhesive composition according to claim 15, wherein the anion of the sulfonylimide-based compound is a bis(fluorosulfonyl)imide anion and/or a bis(trifluoromethanesulfonyl)imide anion.

**17.** The electrically debondable adhesive composition according to any one of claims 1 to 16, wherein a cation of the ionic liquid contains at least one selected from the group consisting of a nitrogen-containing onium cation, a sulfur-containing onium cation and a phosphorus-containing onium salt.

**18.** The electrically debondable adhesive composition according to any one of claims 1 to 17, wherein the content of the ionic liquid is 0.5 parts by mass or more and 30 parts by mass or less, per 100 parts by mass of the polymer.

**19.** An adhesive sheet comprising an electrically debondable adhesive layer formed from the electrically debondable adhesive composition according to any one of claims 1 to 18.

**20.** An adhered body comprising a laminate structure part comprising
an adherend having a metal adherend surface, and
the adhesive sheet according to claim 19, wherein the electrically debondable adhesive layer is adhered to the metal adherend surface.

FIG. 1

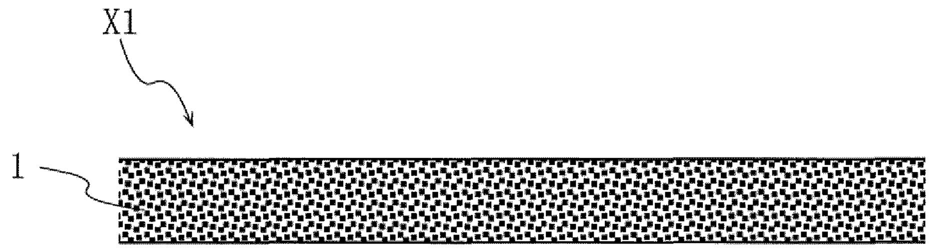


FIG. 2

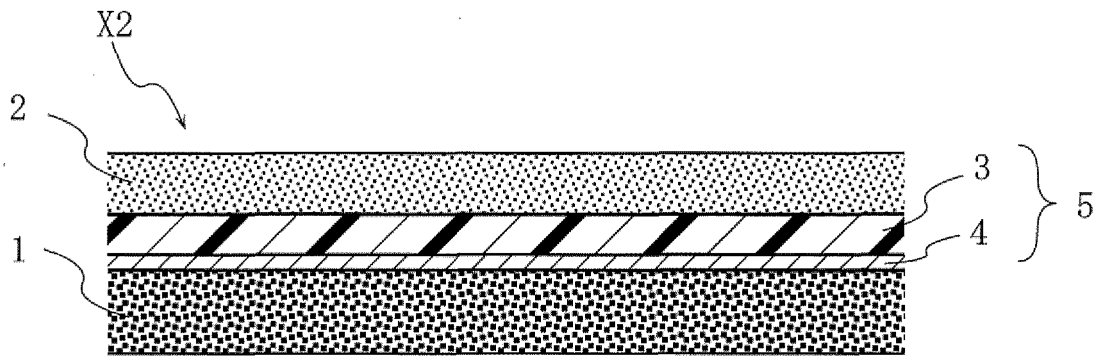


FIG. 3

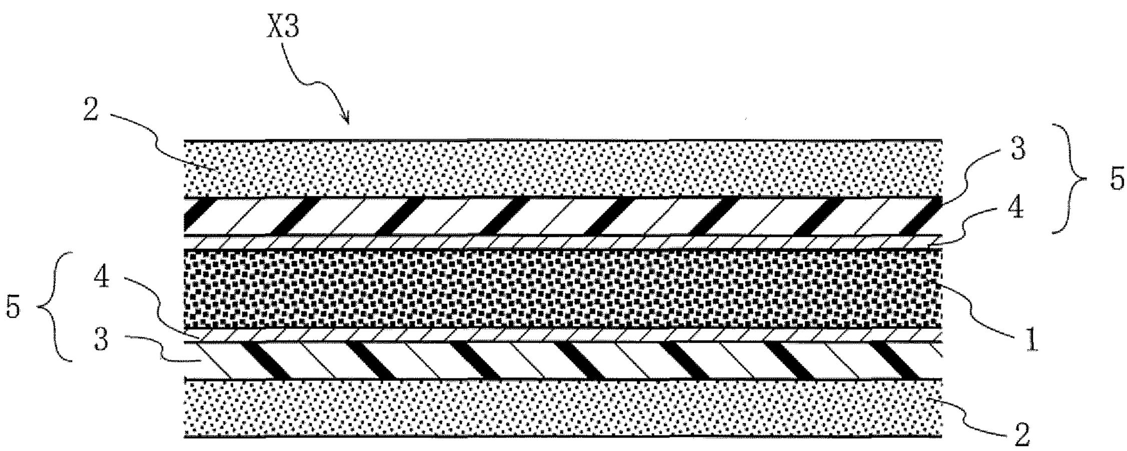


FIG. 4

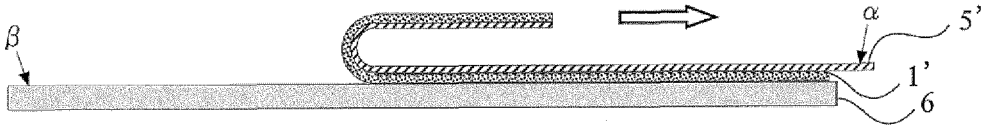

## INTERNATIONAL SEARCH REPORT

International application No.
PCT/JP2018/007896

A. CLASSIFICATION OF SUBJECT MATTER
Int.Cl. C09J201/00(2006.01)i, C09J7/00(2018.01)i, C09J7/20(2018.01)i, C09J9/00(2006.01)i, C09J11/06(2006.01)i

According to International Patent Classification (IPC) or to both national classification and IPC

B. FIELDS SEARCHED

Minimum documentation searched (classification system followed by classification symbols)
Int.Cl. C09J201/00, C09J7/00, C09J7/20, C09J9/00, C09J11/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2010-037355 A (VIGTEQNOS CORPORATION) 18 February 2010, claims, paragraph [0030], examples (Family: none) | 1, 6-20 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 March 2018 (30.03.2018) | 17 April 2018 (17.04.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2018/007896

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-525098 A (LG CHEM, LTD.) 22 July 2010, claims, paragraphs [0034], [0062]-[0065], examples & US 2010/0188620 A1, claims, paragraphs [0039]-[0043], [0082]-[0086], examples & WO 2008/130136 A1 & EP 2147072 A1 & KR 10-2008-0094282 A & CN 101663370 A & TW 200907000 A | 1, 6-20 |
| A | JP 2011-122053 A (CHEIL INDUSTRIES INC.) 23 June 2011, claims (Family: none) | 1-20 |
| A | JP 2012-126783 A (OJI PAPER CO., LTD.) 05 July 2012, paragraph [0013] (Family: none) | 1-20 |
| A | JP 2010-150396 A (CHEIL INDUSTRIES INC.) 08 July 2010, claims & US 2011/0245364 A1, claims & WO 2010/074519 A2 & KR 10-2010-0075723 A & CN 102216408 A & TW 201035264 A | 1-20 |
| A | JP 2001-226641 A (AADER KK) 21 August 2001, paragraph [0031] (Family: none) | 1-20 |
| P, A | WO 2017/064918 A1 (NITTO DENKO CORP.) 20 April 2017, claims (Family: none) | 1-20 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4139851 B
- JP 2010037354 A
- JP 2017040236 A
- JP 2017195729 A


### Non-patent literature cited in the description


- Polymer Handbook. John Wiley & Sons, Inc, 1989
- *Journal of Adhesion Society of Japan,* 1986, vol. 22 (10), 566